(19) Europäisches Patentamt
European Patent Office
Office européen des brevets

(11) **EP 4 310 676 A1**

(12) **EUROPEAN PATENT APPLICATION**
published in accordance with Art. 153(4) EPC

(43) Date of publication:
**24.01.2024 Bulletin 2024/04**

(21) Application number: **22790942.1**

(22) Date of filing: **14.04.2022**

(51) International Patent Classification (IPC):
**G06F 9/48** (2006.01)

(52) Cooperative Patent Classification (CPC):
**G06F 9/48; G06F 9/50**

(86) International application number:
**PCT/CN2022/086747**

(87) International publication number:
**WO 2022/222834 (27.10.2022 Gazette 2022/43)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **19.04.2021 CN 202110420723**

(71) Applicant: **Huawei Technologies Co., Ltd.
Shenzhen, Guangdong 518129 (CN)**

(72) Inventors:
• **HAN, Xiongwei
Shenzhen, Guangdong 518129 (CN)**
• **LI, Xihan
Shenzhen, Guangdong 518129 (CN)**
• **ZHOU, Zhishuo
Shenzhen, Guangdong 518129 (CN)**
• **YUAN, Mingxuan
Shenzhen, Guangdong 518129 (CN)**

(74) Representative: **Gill Jennings & Every LLP
The Broadgate Tower
20 Primrose Street
London EC2A 2ES (GB)**

(54) **DATA PROCESSING METHOD AND APPARATUS**

(57) This application provides a data processing method and apparatus, to solve a large-scale linear programming problem, and introduce a parallel mechanism by performing data splitting, thereby improving problem solving efficiency. The method includes: obtaining service data used to define a service feature, where the service data includes constant data, the service data is used to solve an objective function; obtaining at least one constraint item, where the constraint item includes a constraint relationship between a decision variable in the objective function and the constant data; splitting the constant data to obtain a plurality of data blocks, where each data block is corresponding to at least one sub-constraint item; then allocating the plurality of data blocks to a plurality of compute nodes for parallel processing, so that the plurality of compute nodes generate a plurality of constraint blocks in parallel based on the plurality of data blocks and a corresponding sub-constraint item, to obtain a constraint matrix; and then determining a value of the decision variable based on the constraint matrix to achieve a solve objective of a service problem.

FIG. 3

Obtain input data, where the input data includes service data and at least one constraint item — 301

Split constant data in the service data to obtain a plurality of data blocks, where each data block is corresponding to at least one sub-constraint item — 302

Allocate the plurality of data blocks to a plurality of compute nodes, so that the plurality of compute nodes generate a plurality of constraint blocks in parallel respectively based on each of the plurality of data blocks and a corresponding sub-constraint item, where the plurality of constraint blocks form a constraint matrix — 303

Determine, based on the constraint matrix, a value of a decision variable, to achieve a solve objective of a service problem — 304

EP 4 310 676 A1

**Description**

This application claims priority to Chinese Patent Application No. 202110420723.7, filed with the China National Intellectual Property Administration on April 19, 2021 and entitled "DATA PROCESSING METHOD AND APPARATUS", which is incorporated herein by reference in its entirety.

**TECHNICAL FIELD**

This application relates to the field of service planning, and in particular, to a data processing method and apparatus.

**BACKGROUND**

The planning problem is a process of modeling and solving complex real problems. The planning problem is widely used in the industry like warehouse transfer, supply-demand simulation, multi-factory production scheduling, and vehicle scheduling, in which an optimal solution can be obtained by using a planning model, and a proper scheme can be selected to meet a requirement. An algebraic modeling system (algebraic modeling system, AMS) is a system that uses a planning method to solve a problem in the industry. An algebraic modeling language (algebraic modeling language, AML) is a high-level computer language that is used to describe and solve a large-scale and complex planning problem, and the requirement can be converted into the AMS through the AML. Thus, the optimal solution can be obtained through the AMS, and the proper scheme can be selected to meet the requirement.

However, as the complexity and scale of actual problem service scenarios increase sharply, planning problems in some industries become very large and complex, which poses higher requirements on performance of the AMS, for example, adapting to large-scale, short-time, and fast-changing. Therefore, how to efficiently perform solving becomes an urgent problem that needs to be resolved.

**SUMMARY**

This application provides a data processing method and apparatus, to solve a large-scale linear programming problem, and introduce a parallel mechanism by performing data splitting, thereby improving problem solving efficiency.

According to a first aspect, this application provides a data processing method, including: first, obtaining service data used to define a service feature, where the service data includes constant data, the service feature is a feature related to a service problem, and may be used to represent a feature of the service problem, for example, a type of data related to the service problem and a type of data related to a decision variable, the service data is used to solve an objective function, the objective function indicates a solve objective of the service problem, and the objective function includes a decision variable related to the service feature; then obtaining at least one constraint item, where the constraint item includes a constraint relationship between the decision variable and the constant data; splitting the constant data to obtain a plurality of data blocks, where each data block is corresponding to at least one sub-constraint item, the at least one constraint item includes the at least one sub-constraint item, and the at least one sub-constraint item includes a constraint relationship between split constant data and the decision variable; then allocating the plurality of data blocks to a plurality of compute nodes for parallel processing, so that the plurality of compute nodes generate a plurality of constraint blocks in parallel based on the plurality of data blocks and a sub-constraint item corresponding to each data block, where the plurality of constraint blocks form a constraint matrix; and then determining a value of the decision variable based on the constraint matrix to achieve the solve objective of the service problem.

Therefore, in this implementation of this application, the constant data provided on a service side may be split, to obtain a plurality of data blocks, and the constraint item is correspondingly divided into a plurality of sub-constraint items, which are allocated to the plurality of compute nodes, so that the plurality of compute nodes may respectively process the plurality of data blocks in parallel, to quickly obtain a constraint matrix on which the service problem depends, thereby efficiently obtaining the solve objective of the service problem, and improving efficiency of solving the service problem. In addition, for some multi-core or multi-thread devices or a plurality of devices, such as a server cluster, the service problem is solved by using the method provided in this application, so that a hardware device can be fully used, effective utilization of a hardware device is improved, and working efficiency of the device is improved. For example, the method provided in this application may be performed by a server, and the plurality of compute nodes may include a plurality of electronic devices having a data processing capability such as servers, computers, and mobile phones, or a plurality of processors in an electronic device, or a plurality of processes in at least one processor, or a plurality of threads in at least one processor, to have a capability of processing data in parallel. Through the method in this application, a plurality of data blocks can be processed in parallel, to effectively obtain the constraint matrix.

In a possible implementation, before obtaining the plurality of data blocks through splitting, the method may further include: converting input data into a sparse tensor, where the sparse tensor includes a plurality of constants, where splitting the input data is equal to splitting the sparse tensor to obtain the plurality of data blocks.

Therefore, in this implementation of this application, the plurality of compute nodes may be used to fuse the data blocks with corresponding sub-constraint items in parallel, to efficiently obtain the plurality of constraint blocks, and improve efficiency of forming the constraint matrix, thereby improving efficiency of solving the service problem. Specifically, the input data may be converted into a sparse tensor, and the sparse tensor is split, so that sparseness of the data may be fully used to construct a model for a subsequent service problem, and constructed complexity does not depend on a sum range of a constraint dimension and an expression. Especially for a large-scale solving problem, solving duration of the problem is positively correlated with a constant scale, thereby implementing efficient solving.

In a possible implementation, the constraint item may be converted into a form of an expression graph, for example, variables are associated and/or the variables and specific items in the constraint item are associated, so that an association relationship between the variables and/or an association relationship between the variables and the specific items in the constraint item can be more clearly expressed, and it is easier to divide the constraint item into a plurality of sub-constraint items.

In a possible implementation, a step performed by any compute node described above may include: Any data block (represented as a first data block) and a corresponding sub-constraint item (represented as a target sub-constraint item) are used as an example, the first compute node substitutes the first data block into the target sub-constraint item to obtain a sub-constraint expression, and then a non-trivial item in the sub-constraint expression is screened out, where the non-trivial item includes at least one variable in a decision variable, and the non-trivial item is parsed (for example, a coefficient corresponding to each variable is extracted), to obtain a corresponding constraint block. Therefore, in this implementation of this application, the plurality of compute nodes may be used to separately traverse the sub-constraint expression, and efficiently screen and obtain the non-trivial item in the sub-constraint expression, to quickly find the variable in the sub-constraint item.

In a possible implementation, the obtaining a solve objective of the service problem based on the constraint matrix may include: dividing the constraint matrix in a time dimension to obtain a plurality of sub-problems; and then separately solving the plurality of sub-problems to obtain a value of a decision variable, where the value of the decision variable forms the solve objective of the service problem.

In this implementation of this application, the service problem may be divided into a plurality of sub-problems in a plurality of time periods by dividing the constraint matrix in a time dimension, and then each sub-problem is solved. Solutions to the plurality of sub-problems may form a solution to the service problem. Therefore, the service problem is split, and then the sub-problems are separately solved, so that a solving workload is reduced, and problems of relatively large scales do not need to be solved simultaneously, thereby improving solving efficiency.

In a possible implementation, the separately solving the plurality of sub-problems may include: aggregating the constraint matrix, and solving an aggregated matrix to obtain a guided solution; and solving the plurality of sub-problems by using the guided solution as a constraint condition, to obtain a value of at least one variable in the decision variable included in the plurality of sub-problems.

This application provides an aggregation mechanism, to generate a relatively small-scale linear programming main problem, solve the small-scale main problem, and use the solution to guide derivation of each sub-problem and form a constraint on a solution to the sub-problem. In this implementation of this application, model data of linear programming is aggregated, thereby reducing a magnitude of the main problem. In addition, the solution to the main problem is introduced to lead a process of solving the sub-problem, so that the solution to the sub-problem is closer to the solution to the main problem. This avoids a problem that a long-cycle association cannot be captured, so it is easy to fall into local optimality and/or an infeasible solution easily occurs, thereby improving effectiveness of a finally obtained solution.

In a possible implementation, the solving the plurality of sub-problems by using the guided solution as a constraint condition may include: solving the plurality of sub-problems in a preset order by using the guided solution as the constraint condition, to obtain the value of the at least one variable in the decision variable included in the plurality of sub-problems. At least one sub-problem that is arranged after a first sub-problem in the preset order is aggregated, to obtain an additional sub-problem, the first sub-problem is any one of the plurality of sub-problems, and the first sub-problem and the additional sub-problem are fused to obtain a fused sub-problem. The fused sub-problem is solved to obtain a value of at least one variable of the decision variable included in one of the plurality of sub-problems.

In this implementation of this application, future information of the service problem is fused when the service problem is solved in local units, and the solution to the main problem obtained after aggregation is added as a constraint to solve each sub-problem, thereby improving effectiveness of the final solution. It is equivalent to fusing future information of each sub-problem, and using the solution to the main problem as a constraint, which can minimize an optimality loss of the solution to the service problem.

In a possible implementation, the dividing the constraint matrix to obtain a plurality of sub-problems may include: obtaining user input data; determining a decomposition cycle based on the user input data; and decomposing the constraint matrix based on the decomposition cycle to obtain the plurality of sub-problems.

Therefore, in this implementation of this application, the decomposition cycle may be determined based on a user requirement, to improve user experience.

Optionally, the user input data may be included in the service data, or may be data independent of the service data. For example, the data processing method provided in this application may be deployed on a server, and the user may send the user input data to the server by using a client, for example, including a requirement of the user for efficiency or optimality of a solution.

In a possible implementation, there is a negative correlation between the solving efficiency and the decomposition cycle. A smaller decomposition cycle or aggregation cycle indicates higher solving efficiency. When sub-problems are divided, a higher efficiency requirement indicates shorter divided unit duration (that is, duration corresponding to each sub-problem); and a longer decomposition cycle indicates more data on which the solving is based, and indicates a more effective solution. Therefore, a proper decomposition cycle or aggregation cycle may be determined based on requirements of efficiency and optimality, to decompose the constraint matrix based on the decomposition cycle, or aggregate the sub-problems based on the aggregation cycle, thereby facilitating solving.

According to a second aspect, this application provides a method for generating a production plan, including: first, obtaining service data used to define a service feature, where the service data includes constant data, the service data is used to solve an objective function, the an objective function indicates a solve objective of a service problem, the solve objective indicates solving a production plan for producing a product, the constant data includes a production target of a to-be-produced product and a parameter for producing the product, the production target includes a quantity of the products produced, and the objective function includes a decision variable related to the service feature; obtaining at least one constraint item, where the constraint item includes a constraint relationship between the decision variable and the constant data; splitting the constant data to obtain a plurality of data blocks, where each data block is corresponding to at least one sub-constraint item, and the at least one sub-constraint item includes a constraint relationship between split constant data and the decision variable; allocating the plurality of data blocks to a plurality of compute nodes, so that the plurality of nodes generate a plurality of constraint blocks in parallel based on the plurality of data blocks and a sub-constraint item corresponding to each data block, where the plurality of constraint blocks form a constraint matrix; and determining a value of the decision variable based on the constraint matrix to achieve the solve objective of the service problem, where the solve objective represents the production plan for producing the product.

Therefore, in this implementation of this application, a service side can provide a production target related to a product for which a production plan needs to be arranged, a production-related parameter, and other data that represents a feature of the service problem, and then an AMS may split data provided on the service side, to obtain a plurality of data blocks, and correspondingly divide the constraint item into a plurality of sub-constraint items, so that the plurality of data blocks may be separately processed in parallel, to quickly obtain a constraint matrix on which the service problem depends, thereby efficiently obtaining a solve objective of the service problem, and improving efficiency of solving the service problem. In addition, for some multi-core or multi-thread devices or a plurality of devices, such as a server cluster, the service problem is solved by using the method provided in this application, so that a hardware device can be fully used, effective utilization of a hardware device is improved, and working efficiency of the device is improved. For example, the method provided in this application may be executed by a server, and the plurality of compute nodes may include a plurality of servers, or a plurality of processors in the server, or a plurality of processes in at least one processor in the server, or a plurality of threads in at least one processor, to have a capability of processing data in parallel. Through the method in this application, a plurality of data blocks can be processed in parallel, to effectively obtain the constraint matrix.

In a possible implementation, the fusing each of the plurality of data blocks and a corresponding sub-constraint item may specifically include: converting input data into a sparse tensor, where the sparse tensor includes a plurality of constants, and splitting the input data is splitting the sparse tensor, to obtain the plurality of data blocks.

Therefore, in this implementation of this application, a data block may be substituted into a corresponding sub-constraint item in parallel, to obtain a constraint block, thereby improving efficiency of forming the constraint matrix, and improving efficiency of solving the service problem. Specifically, the input data may be converted into a sparse tensor, and the sparse tensor is split, so that sparseness of the data may be fully used to construct a model for a subsequent service problem, and constructed complexity does not depend on a sum range of a constraint dimension and an expression. Especially for a large-scale solving problem, solving duration of the problem is positively correlated with a constant scale, thereby implementing efficient solving.

In a possible implementation, the constraint item may be converted into a form of an expression graph, for example, variables are associated and/or the variables and specific items in the constraint item are associated, so that an association relationship between the variables and/or an association relationship between the variables and the specific items in the constraint item can be more clearly expressed, and it is easier to divide the constraint item into a plurality of sub-constraint items.

In a possible implementation, a step performed by any compute node (referred to as a first compute node below) in the plurality of compute nodes may include: The first compute node fuses a first data block (any one of the plurality of data blocks) with a corresponding target sub-constraint item, to obtain a sub-constraint expression; screens and obtains a non-trivial item from the sub-constraint expression, where the non-trivial item in the sub-constraint expression includes at least one variable in the decision variable; and parses the at least one variable (for example, a coefficient corresponding to each variable is extracted) to obtain a corresponding constraint block. Therefore, in this implementation of this application, the plurality of compute nodes may be used to separately traverse the sub-constraint expression, and efficiently screen and obtain the non-trivial item in the sub-constraint expression, to quickly find the variable in the sub-constraint item.

In a possible implementation, the obtaining a solve objective of a service problem based on a constraint matrix includes: dividing the constraint matrix in a time dimension to obtain a plurality of sub-problems, where the service problem indicates solving a production plan in a preset time period in the time dimension, and each sub-problem in the plurality of sub-problems indicates solving a production plan for producing the product in a corresponding time period; and separately solving the plurality of sub-problems to obtain the value of the decision variable, where the value of the decision variable forms the solve objective of the service problem.

Therefore, in this implementation of this application, a production plan that needs to be solved may be divided into a plurality of phases in a time dimension, and then a production plan of each phase is solved, to reduce a scale of each solving, improve solving efficiency, quickly obtain the production plan of each phase, and improve overall solving efficiency.

In a possible implementation, the separately solving the plurality of sub-problems includes: aggregating the constraint matrix, and solving an aggregated matrix to obtain a guided solution; and solving the plurality of sub-problems by using the guided solution as a constraint condition, to obtain a value of at least one variable in the decision variable included in the plurality of sub-problems.

This application provides an aggregation mechanism, to generate a relatively small-scale linear programming main problem, solve the small-scale main problem, and use the solution to guide derivation of each sub-problem and form a constraint on a solution to the sub-problem. In this implementation of this application, model data of linear programming is aggregated, thereby reducing a magnitude of the main problem. In addition, the solution to the main problem is introduced to lead a process of solving the sub-problem, so that the solution to the sub-problem is closer to the solution to the main problem. This avoids a problem that a long-cycle association cannot be captured, so it is easy to fall into local optimality and/or an infeasible solution easily occurs, thereby improving effectiveness of a finally obtained solution. In a possible implementation, the solving the plurality of sub-problems by using the guided solution as a constraint condition may include: solving the plurality of sub-problems in a preset order by using the guided solution as the constraint condition, to obtain the value of the at least one variable in the decision variable included in the plurality of sub-problems. At least one sub-problem that is arranged after a first sub-problem in the preset order is aggregated, to obtain an additional sub-problem, the first sub-problem is any one of the plurality of sub-problems, and the first sub-problem and the additional sub-problem are fused to obtain a fused sub-problem. The fused sub-problem is solved to obtain a value of at least one variable of the decision variable included in one of the plurality of sub-problems.

In this implementation of this application, future information of the service problem is fused when the service problem is solved in local units, and the solution to the main problem obtained after aggregation is added as a constraint to solve each sub-problem, thereby improving effectiveness of the final solution. It is equivalent to fusing future information of each sub-problem, and using the solution to the main problem as a constraint, which can minimize an optimality loss of the solution to the service problem.

In a possible implementation, the dividing the constraint matrix in a time dimension to obtain a plurality of sub-problems includes: obtaining user input data; determining a decomposition cycle based on the user input data, where a length of the decomposition cycle is less than a preset length; and decomposing the constraint matrix based on the decomposition cycle to obtain the plurality of sub-problems.

Therefore, in this implementation of this application, the decomposition cycle may be determined based on a user requirement, so that optimality or solving efficiency of a finally obtained solution meets the user requirement, thereby improving user experience.

Optionally, the user input data may be included in the service data, or may be data independent of the service data. For example, the data processing method provided in this application may be deployed on a server, and the user may send the user input data to the server by using a client, for example, including a requirement of the user for efficiency or optimality of a solution.

In a possible implementation, there is a negative correlation between the solving efficiency and the decomposition cycle. A smaller decomposition cycle or aggregation cycle indicates higher solving efficiency. When sub-problems are divided, a higher efficiency requirement indicates shorter divided unit duration (that is, duration corresponding to each sub-problem); and a longer decomposition cycle indicates more data on which the solving is based, and indicates a more effective solution. Therefore, a proper decomposition cycle or aggregation cycle may be determined based on requirements of efficiency and optimality, to decompose the constraint matrix based on the decomposition cycle, or aggregate the sub-problems based on the aggregation cycle, thereby facilitating solving.

According to a third aspect, an embodiment of this application provides a data processing apparatus. The data processing apparatus has a function of implementing the data processing method according to the first aspect. The function may be implemented by hardware, or may be implemented by hardware executing corresponding software. The hardware or the software includes one or more modules corresponding to the foregoing function.

According to a fourth aspect, an embodiment of this application provides an apparatus for generating a production plan. The apparatus for generating a production plan has a function of implementing the method for generating a production plan according to the second aspect. The function may be implemented by hardware, or may be implemented by hardware executing corresponding software. The hardware or the software includes one or more modules corresponding to the foregoing function.

According to a fifth aspect, an embodiment of this application provides a data processing apparatus, including a processor and a memory. The processor and the memory are interconnected through a line, and the processor invokes program code in the memory to perform a processing-related function in the data processing method according to any item of the first aspect. Optionally, the data processing apparatus may be a chip.

Optionally, there may be one or more processors, and the one or more processors have a plurality of threads or a plurality of processes. After the data block is split in the first aspect, the obtained plurality of pieces of data may be allocated to the plurality of threads or the plurality of processes, so that the plurality of threads or the plurality of processes can be processed in parallel, and a plurality of constraint blocks can be quickly obtained, thereby efficiently obtaining the constraint matrix, and constructing a planning model for the service problem.

According to a sixth aspect, an embodiment of this application provides an apparatus for generating a production plan, including a processor and a memory, where the processor and the memory are interconnected through a line, and the processor invokes program code in the memory to perform a processing-related function in the data processing method according to any item of the second aspect. Optionally, the apparatus for generating a production plan may be a chip.

Optionally, there may be one or more processors, and the one or more processors have a plurality of threads or a plurality of processes. After the data block is split in the first aspect, the obtained plurality of pieces of data may be allocated to the plurality of threads or the plurality of processes, so that the plurality of threads or the plurality of processes can be processed in parallel, and a plurality of constraint blocks can be quickly obtained, thereby efficiently obtaining the constraint matrix, and constructing a planning model for the service problem.

According to a seventh aspect, an embodiment of this application provides a digital processing chip or a chip. The chip includes a processing unit and a communications interface. The processing unit obtains a program instruction by using the communications interface, the program instruction is executed by the processing unit, and the processing unit is configured to perform a processing-related function according to any optional implementation of the first aspect or the second aspect.

According to an eighth aspect, an embodiment of this application provides a computer-readable storage medium including instructions. When the instruction is run on a computer, the computer is enabled to perform the method according to any optional implementation of the first aspect or the second aspect.

According to a ninth aspect, an embodiment of this application provides a computer program product including a computer program/instruction. When the computer program product is executed by a processor, the processor is enabled to perform the method according to any optional implementation of the first aspect or the second aspect.

## BRIEF DESCRIPTION OF DRAWINGS

FIG. 1 is a schematic diagram of a system architecture according to this application;
FIG. 2 is a schematic diagram of another system architecture according to this application;
FIG. 3 is a schematic flowchart of a data processing method according to this application;
FIG. 4 is a schematic flowchart of another data processing method according to this application;
FIG. 5 is a schematic diagram of an expression graph according to this application;
FIG. 6 is a schematic flowchart of another data processing method according to this application;
FIG. 7 is a schematic diagram of a hardware resource allocation manner according to this application;
FIG. 8 is a schematic flowchart of traversal and allocation according to this application;
FIG. 9 is a schematic diagram of a solving manner of a forward rolling horizon algorithm according to this application;
FIG. 10 is a schematic diagram of a rolling solving manner of aggregating future information according to this application;
FIG. 11 is a schematic diagram of a guided rolling horizon solving manner added with a main problem according to this application;
FIG. 12 is a schematic diagram of a fusion algorithm solving manner according to this application;

FIG. 13 is a schematic flowchart of a method for generating a production plan according to this application;
FIG. 14 is a schematic diagram of an application scenario of a planning problem according to this application;
FIG. 15 is a schematic diagram of a solving effect of a data processing method according to this application;
FIG. 16 is a schematic diagram of a structure of a data processing apparatus according to this application;
FIG. 17 is a schematic diagram of a structure of an apparatus for generating a production plan according to this application;
FIG. 18 is a schematic diagram of a structure of another data processing apparatus according to this application; and
FIG. 19 is a schematic diagram of a structure of another apparatus for generating a production plan according to this application.

## DESCRIPTION OF EMBODIMENTS

The following describes technical solutions in the embodiments of this application with reference to the accompanying drawings in the embodiments of this application. Apparently, the described embodiments are merely some but not all of the embodiments of this application. Based on the embodiments in this application, all other embodiments obtained by a person of ordinary skill in the art without creative work shall fall within the protection scope of this application.

The planning problem is a process of modeling and solving complex real problems. The planning problem is widely used in the industry like warehouse transfer, supply-demand simulation, multi-factory production scheduling, and vehicle scheduling, in which an optimal solution can be obtained by using a planning model, and a proper scheme can be selected to meet a requirement. An algebraic modeling system AMS is a system that uses a planning method to solve a problem in the industry. An algebraic modeling language AML is a high-level computer language that is used to describe and solve a large-scale and complex planning problem, and the requirement can be converted into the AMS through the AML. Thus, the optimal solution can be obtained through the AMS, and the proper scheme can be selected to meet the requirement.

First, an AMS system architecture to which the data processing method provided in this application is applied is described as an example. The AMS may be deployed on a server to provide a solve service for a user. For example, the user may input a requirement and provide data, and the data that is input by the user is solved by using the AMS, to obtain a solution that meets the requirement of the user. Alternatively, the server may generate data based on an actual service problem, and perform solving based on the data, to obtain a solution that can solve the actual service problem.

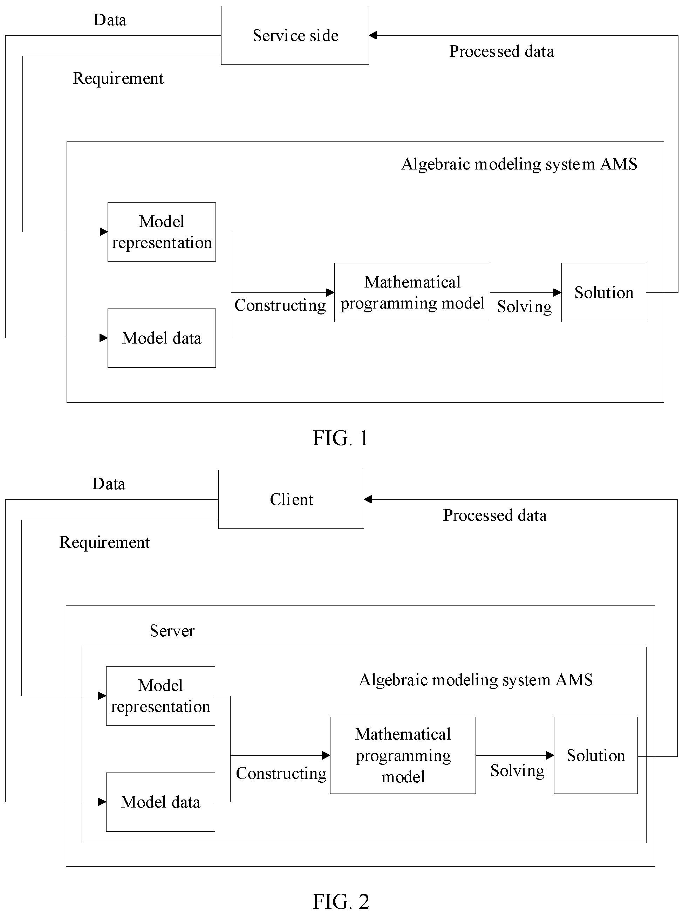

For example, an architecture to which the AMS is applied may be shown in FIG. 1. A service side and the AMS may be deployed on a same device, or may be deployed on different devices. Generally, a server or another device that carries the AMS may have one or more central processing units (central processing unit, CPU), support multi-process, multi-thread, or the like, or may carry the AMS by using a server cluster, to process data in parallel. The service side may be configured to communicate with the AMS by using an interface connected to the AMS, and transmit data to the AMS. For example, the service side may be an application or a web page deployed on a client, and the user may input data in the client, and transmit, to the AMS by using the interface connecting the service side to the AMS, the data that is input by the user, for subsequent processing.

Service problem

For example, the service side and the AMS may be deployed on a same server or client device. The AMS may be downloaded in a form of software and installed on a device on which the service side is located. Data and a requirement that are obtained by the service side or generated based on an actual scenario may be input into the AMS. For example, data and a requirement that are located in a local device or another device may be opened when software carrying an AMS function is run. Generally, the data and the requirement that are input from the service side to the AMS can indicate the service problem.

For another example, as shown in FIG. 2, the AMS may be deployed on a server, the service side may be a client program deployed on a client device, a user may access an AMS system on the server by using the client program, and the server and the client program are connected by using a wired or wireless network. The user can also access a service provided by the AMS on the server by invoking an API through a web page.

It should be noted that the data processing method and the method for generating a production plan that are provided in this application may be deployed on an AMS. The AMS may be deployed on a server or a server cluster. The compute node mentioned below in this application may be a node having a computing capability, for example, an electronic device having a data processing capability, such as a server, a computer, or a mobile phone, or may be a process or a thread in an electronic device having a data processing capability. One server, one processor, one process, or one thread is equivalent to one compute node, and details are not described in the following.

During processing of the AMS, the data that is input from the service side may be used as model data, the requirement is used as model representation, and the planning model is constructed based on the model representation and the model data. Then, the service problem is solved by using a to-be-solved model, and an obtained solution is fed back to the service side as processed data. The service side may perform a next operation based on received data.

For example, in a vehicle scheduling scenario, a vehicle scheduling platform may be deployed on a server, and a service side of the vehicle scheduling platform may be deployed on the server, or may be deployed on a client, or the like. A vehicle scheduling requirement may be generated on the service side, and conditions such as a route requirement and a driving time requirement for each vehicle are input into the AMS. Then, data that is input from the service side is used as model data and model representation by using the AMS, and is converted into a planning model by using the AML. A scheduling scheme of each vehicle is output by using the planning model, and is fed back to the service side. That is, a large number of constraint items and data in a linear programming problem are input to the service side, and the AMS solves the service problem based on the data that is input from the service side.

For another example, when a production plan of a factory is planned, that is, factory production scheduling is performed, the planning may be performed by using a server. A service side may be deployed on the server, or may be deployed on a client. Herein, an example in which the service side is deployed on the client is used. The user can provide a quantity of production lines of the factory, production capacity of each production line, materials required for production, or the like on the client. The client sends the information to the AMS. Then the data that is input from the service side is used as model data and model representation by using the AMS, and is converted into a planning model by using the AML. Production arrangement of the factory is planned by using the planning model, for example, a type and quantity of products produced in each production line each day, and the production arrangement is fed back to the client.

For example, a process of solving by using the AMS may specifically include the following items.

Construction: A problem that is input from the service side is converted into a planning model that can be identified by the computer. Based on the AML, the planning model and actual data are compiled into a model language that can be recognized by the computer, which is a bridge between a planning model definition and computer problem understanding.

Solve: Perform numerical calculation on the planning model that is input to obtain an optimal solution.

Analysis: The solution is restored to an actual decision scheme that can be understood by the service side, and feasibility and robustness of the solution are analyzed.

Optimization: Optimization algorithms are deployed based on different requirements (such as an optimal performance requirement and an efficiency requirement) to improve performance of the AMS.

In recent years, with the expansion of the scale of problems in the industry, the complexity and scale of actual problem service scenarios increase sharply. Some planning problems in the industry become very large and complex, and the algebraic modeling system is greatly hindered. For example, the modeling efficiency is low due to the large-scale sparse problem, it is unable to deal with drastic changes in the scale of the problems, the time for solving problems of different scales varies greatly, and solution quality of a decomposition algorithm is low. For example, the planning problem has the following difficulties: large-scale, that is, the scale of variables and constraints usually exceeds millions or even tens of millions; short-time, that is, a scheme needs to be output in minutes; and fast-changing, that is, the input data changes quickly, and a model iteration frequency is high.

In this context, the AMS needs to support fast conversion from industrial data to the planning model, provide a clear, flexible, and highly maintainable modeling application programming interface (application programming interface, API), and output stable schemes in terms of efficiency and result for different scales of problems. Two key steps in the AMS are construction and solve, that is, a process of constructing the planning model and a process of performing solve based on the constructed planning model, which are also main performance-dependent steps for the AMS.

The process of constructing the planning model is to convert a requirement transmitted on the service side into the planning model. That is, the requirement is described in a manner of the planning model, so that the server can determine, by using the planning model, a problem that needs to be solved. However, currently, the AMS is usually processed by a single thread, and generally, an implementation hardware environment for implementing the AMS is usually a multi-core low-dominant frequency environment. Therefore, an existing AMS may not be perfectly adapted to a hardware facility, and not only efficiency is reduced, but also a waste of computing resources is caused.

A process of solving is to solve a constructed planning model, to obtain a solution to a service problem. Because a to-be-solved problem usually has a sequence (for example, a time sequence) structure, a common acceleration method is a rolling horizon (rolling horizon, RH) decomposition algorithm, that is, a sequence problem is divided into blocks and then solved in sequence, to accelerate the solving. However, because long-cycle association information cannot be captured, it is easy to fall into misunderstanding of local optimal and global poor.

Therefore, this application provides a data processing method, which may be used to solve a large-scale linear programming problem, such as warehouse transfer, supply-demand simulation, multi-factory production scheduling, and vehicle scheduling. A parallel mechanism of a plurality of threads of one or more processors is introduced, and sparseness of a model is fully used, so that duration required for constructing the planning model is related only to a constant scale, and can be greatly accelerated in a multi-core low-dominant frequency hardware environment, thereby improving solve efficiency. In this way, planning for problems such as warehouse transfer, supply-demand simulation, multi-factory production scheduling, and vehicle scheduling can be finished efficiently. In addition, global information of the input data is fully used, for example, a solution to a main problem is used to guide a sub-problem solving process, thereby improving the solution quality of the decomposition algorithm. The following describes in detail specific steps in the AMS provided in this application.

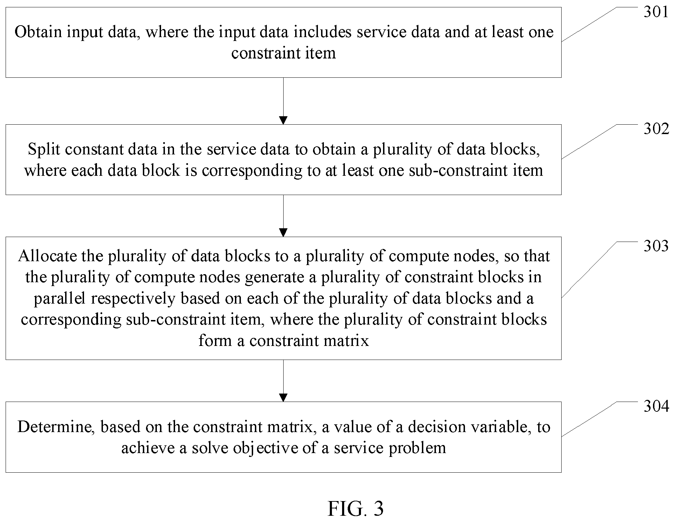

Refer to FIG. 3, a schematic flowchart of a data processing method according to this application is as follows.

301: Obtain input data, where the input data includes service data and at least one constraint item.

The service data includes constant data.

The service data may be used to represent a service feature related to a service problem, for example, a production quantity of each product in a production scheduling problem. Generally, different service problems may have different service features. The constant data included in the service data may specifically include: a part of parameters in an objective function of the service problem, or all or a part of parameters in the constraint item.

The at least one constraint item includes a constraint relationship between a decision variable and the constant data, that is, the at least one constraint item includes a constraint relationship formed between the decision variable and the constant data. Generally, input data may include data related to the service problem, where the constant data and the constraint item may form a constraint condition for a to-be-solved service problem, the decision variable is a variable used in the to-be-solved service problem, and a value of the decision variable obtained through subsequent solving may form a solve objective.

The input data may include data that is input from the service side to the AMS, the input data may include the constant data, and the service data may be used to define a service feature, that is, data included in the service data may be used to represent the service feature of the service problem. It may be understood that each service problem has a feature that is distinguished from another service problem. For example, the feature of the service problem is represented by using a used data type, a data amount, a type of a solved target, or the like.

For example, if the service problem is solving production scheduling of the factory, the constant data included in the service data may include information that represents the service feature, such as a quantity of production lines of the factory, a type of products produced on each production line, a yield of each production line, or a cost of producing a product on each production line.

For another example, if the service problem indicates solving logistics planning, the constant data in the service data may include the information that can represent the service feature such as a plurality of nodes, a node that each line needs to pass through, or specific information of each node.

The service data may be used to solve an objective function, where the objective function indicates a solve objective of the service problem, and the objective function includes a decision variable related to the service feature, that is, a variable that needs to be solved. For example, the objective function may represent a minimum production quantity of a production target of the factory or a minimum production quantity, and the objective function may include a variable related to the production quantity of the factory, for example, a production quantity of each production line or production duration of each production line.

When the service side and the AMS are deployed on a same server, the input data may be data generated by the server based on an actual service requirement. When the service side and the AMS are deployed on different devices, for example, the AMS is deployed on the server, and the service side is deployed on the client, the service data may be data generated by the client based on an actual requirement or data that is input by the user in the client, and then the data is transmitted to the server by using a wired or wireless network, so that the server receives the service data.

For example, in a factory production scheduling scenario, the constant data in the input data may include a production cost, a transportation cost, a procurement cost, a factory production capacity upper limit or a product processing structure, and a generation target or a cost that needs to be achieved during factory production, and the input data may further include a constraint item expression. The constant data and the constraint item expression can be fused to form a constraint for the service problem. Specifically, for example, the constant data may include: there are now two factories, a processing capability of each factory is 1000 PCS/day, one display is required for processing one desktop computer, and a target (that is, a constant) that needs to be achieved may include: 2000 desktop computers, 1000 displays, 800 laptop computers, and other data. The included 1000 PCS/day, 2000 desktop computers, 1000 displays, and 800 laptop computers can be understood as constants, and the constraint item expression can be represented as N displays required to process M computers. The constraint item and the provided data are combined to indicate a problem that needs to be solved. The service problem may be understood as a problem that needs to be considered in performing a production planning, and may include: determining a processing order, a processing quantity, a processing time, a processing place, and the like of the desktop computer, the display, and the laptop computer, that is, the decision variable.

302: Split the constant data in the service data to obtain a plurality of data blocks, where each data block is corresponding to at least one sub-constraint item.

The constant data may be split according to a specific rule to obtain the plurality of data blocks. Correspondingly, the constraint item is also divided into a plurality of sub-constraint items (which is referred to as the sub-constraint item for ease of distinction), and each data block is corresponding to one or more sub-constraint items.

During data splitting, the constraint item may be first split, and then the constant data is split based on a split sub-constraint item; or the data block may be first split, and then the constraint item is split based on a split data block, to obtain the sub-constraint item corresponding to each data block.

For example, if the constant includes 2000 desktop computers, 1000 displays, and 800 laptop computers, the data may be split into: 2000 desktop computers are one data block, 1000 displays are one data block, 800 laptop computers are one data block, or the like. The constraint item may be understood as a corresponding constraint on production of the foregoing 2000 desktop computers, 1000 displays, 800 laptop computers, or the like. For example, each computer needs one display for production, and each laptop computer needs one display for production, which is equivalent to a constraint item including 2800 constraints. Correspondingly, after the data is split, the constraint item is also split into a plurality of parts along with splitting of the data block, and each data block is corresponding to one or more sub-constraint items. For example, one sub-constraint item may be represented as: one display is required for producing one computer, and one display is required for producing one laptop computer.

Generally, the constraint item may be represented by using an expression, and the service data may be represented by using a constant. Certainly, the constraint item and the service data may also be represented in other manners, such as a matrix and a text description. For ease of understanding, in the following implementations of this application, an example in which the service data is a constant and the constraint item is an expression is used for description. For example, the constant data may include a constant corresponding to a requirement or a target such as a value of a production target, and may further include a weighting parameter or a parameter corresponding to the requirement or the target such as a processing cycle or a processing cost.

In actual scenarios, the scale is usually large, for example, tens of thousands of goods and hundreds of factories. In addition, several months of production scheduling decisions need to be made, and variables that need to be decided only in the problem may be $10^{10}$. However, in practice, a transport network and a processing network are highly sparse, for example, goods can be transported only between specified factories and within a specified period of time, and production of goods depends on raw materials that account for only a small fraction of all goods codes. Sparseness of these structures is ultimately indicated in data. Therefore, in the implementation of this application, the constant data may be split, so that a model for solving a problem is constructed to be related only to a constant scale, and problem solving efficiency is improved. The following uses an example in which data is split in a time dimension for description.

In addition, in addition to splitting the constant data in the time dimension, the constant data may be further split based on a type of various types of data included in the constant data, or may be split based on a preset size. For example, data of a same type is allocated to a same data block. In the following implementation of this application, an example in which the constant data is split in a time dimension is used for description, and details are not described in the following.

303: Allocate the plurality of data blocks to a plurality of compute nodes, so that the plurality of compute nodes generate a plurality of constraint blocks in parallel respectively based on each of the plurality of data blocks and a corresponding sub-constraint item, where the plurality of constraint blocks form a constraint matrix.

After the constant data is split, a plurality of data blocks may be obtained. Then, the plurality of data blocks and corresponding sub-constraint items are allocated to the plurality of compute nodes, so that the plurality of nodes generate the plurality of constraint blocks based on the plurality of data blocks and the corresponding sub-constraint items. That is, each data block and a corresponding sub-constraint item are fused by using the plurality of compute nodes separately, to obtain a plurality of fused sub-constraint items (which is referred to as a constraint block for ease of distinction), and the plurality of constraint blocks may form a constraint matrix. The constraint matrix may be understood as a matrix that can represent a to-be-solved problem.

The plurality of data blocks are allocated to a plurality of compute nodes for processing, and the plurality of compute nodes may perform parallel processing on the plurality of data blocks and corresponding sub-constraint items, thereby improving efficiency of obtaining the constraint matrix. A compute node may be a node that has a processing capability, such as a server, a personal computer (personal computer, PC), a processor, a process, or a thread, which can be specifically adjusted based on an actual application scenario. This is not limited in this application.

More specifically, there may be a plurality of manners of allocating the plurality of data blocks to the plurality of compute nodes. For ease of understanding, the following describes some possible allocating manners by using examples.

1. Multi-thread execution

Data blocks and corresponding sub-constraint items may be allocated to a plurality of different threads for execution, where the plurality of threads are different threads in different processes or in a same process. Constant data in the data block is fused in parallel by using a plurality of threads into a sub-constraint item corresponding to the data block, to obtain a constraint block.

Specifically, after the plurality of data blocks are obtained through splitting, an API of an operating system may be invoked to implement allocation of data blocks, for example, a processing resource is allocated by using a process scheduling function of the operating system. The plurality of data blocks and the corresponding sub-constraint items may be randomly allocated to the plurality of threads, or may be evenly allocated to the plurality of threads. Alternatively, how to allocate the plurality of data blocks and the corresponding sub-constraint items to the plurality of threads is determined based on a quantity relationship between the data blocks and the threads, a busy degree of the thread, or the like, and the data blocks and the corresponding sub-constraint items are allocated to the plurality of threads by invoking the API.

2. Multi-process execution

The plurality of data blocks and the corresponding sub-constraint items may be allocated to a plurality of different processes for parallel processing, that is, the data blocks and the corresponding sub-constraint items are fused. Specifically, different data blocks may be allocated to different processes for processing, or a plurality of data blocks may be allocated to a same process, that is, a plurality of data blocks and corresponding sub-constraint items may be processed in one process. This is not limited in this application.

Further, in each process, the allocated data blocks may be further allocated to different threads in the process for processing. Specifically, adjustment may be performed based on an actual application. A specific manner of allocating a plurality of data blocks to a plurality of processes is not limited herein.

For example, software that carries the AMS function provided in this application may invoke the API of the operating system, to allocate the plurality of data blocks obtained through splitting to another process or a thread in another process. The allocating manner may be random allocation, equal allocation, allocation based on load of each process, allocation based on a status of each process, or the like. A specific allocating manner may be determined based on the process scheduling function of the operating system, and is not limited herein.

3. Multi-CPU execution

In a device having a plurality of CPUs, the plurality of data blocks and the corresponding sub-constraint items may be allocated to different CPUs for processing, and a specific allocating manner may include but is not limited to random allocation, load allocation based on each CPU, or computing power allocation based on each CPU.

For example, data splitting steps described above may be performed by one CPU. After the CPU obtains the plurality of data blocks through splitting, the plurality of data blocks may be allocated to another CPU for processing by using a communications interface or a bus among CPUs. For example, more data blocks may be allocated to a CPU with relatively low load, and fewer data blocks may be allocated to a CPU with relatively high load; or more data blocks are allocated to a CPU with relatively high computing power, and fewer data blocks are allocated to a CPU with relatively low computing power, so that a data processing amount of each CPU can be balanced, and efficiency of processing the plurality of data blocks is improved.

4. Multi-device execution

The AMS may be deployed on a server cluster. Servers in the server cluster may be connected by using a wired or wireless interface. One of the servers may be specified as a server that controls or manages other servers, or each server in the server cluster may control or manage other servers. One of the servers may split the service data, and the plurality of data blocks and the corresponding sub-constraint items obtained through splitting may be allocated to different servers in the cluster for processing.

Specifically, data splitting steps described above may be performed by one of the servers. After the plurality of data blocks are obtained, the server or a server having a management function in the cluster may send the plurality of data blocks to another server for processing. For example, a load balancing server in the cluster may allocate, based on a load status of each server in the cluster, an amount of data blocks processed by each server, and the load balancing server allocates the data blocks and the corresponding sub-constraint items to each server by using an interface connected to each server. For example, fewer data blocks may be allocated to a server with relatively heavy load, and more data blocks may be allocated to a server with relatively light load. Therefore, the data blocks may be allocated to each device based on load of each server, so that a data amount processed by each server matches the load, thereby improving resource utilization of each server.

In addition, another distributed system may be used to implement parallel processing of the plurality of data blocks, to accelerate a processing speed. This is not limited herein.

Therefore, in this implementation of this application, the constant data may be split into a plurality of data blocks, and correspondingly, a first constraint is also split into a plurality of sub-constraint items, so that each data block and a corresponding sub-constraint item can be processed in parallel by using a plurality of compute nodes, thereby efficiently obtaining the constraint matrix. In addition, a hardware resource can be fully used to improve utilization of the hardware resource.

Optionally, constant data may be converted into a sparse tensor, and then the sparse tensor is split to obtain a plurality of data blocks. Then, constants in the plurality of data blocks may be substituted into corresponding sub-constraint items, to obtain a plurality of constraint blocks. For ease of distinction, the following uses an example in which one of the sub-constraint items (which is referred to as a target sub-constraint item) is allocated to a first compute node (any one of the plurality of nodes) for processing for description. For example, any data block in the plurality of data blocks is used as an example. The first compute node substitutes a constant in the first data block into a corresponding sub-constraint item, to obtain one constraint block.

Further, the first compute node may specifically substitute the first data block into a corresponding sub-constraint item, to obtain a sub-constraint expression carrying a constant. Then, the first compute node traverses the sub-constraint expression, and screens and obtains at least one variable included in at least one non-trivial item; and parses the at least one variable, for example, screens and obtains a coefficient of each variable or directly screens and obtains a non-trivial item, to obtain the constraint block.

More specifically, in a process in which the first compute node traverses the sub-constraint expression to screen and obtain at least one variable in the sub-constraint expression, each item in the sub-constraint expression may be traversed to screen and obtain a non-trivial item in the sub-constraint expression, that is, an item having a variable. In addition, in a process of parsing the at least one variable, a coefficient related to the variable may be screened out from the non-trivial item. A coefficient of the non-trivial item in one sub-constraint expression may be used as one row or one column in the matrix, and coefficients of the non-trivial items in a plurality of sub-constraint items may form the constraint matrix.

For example, a production quantity of a factory is used as an example. The constant data may be split into a plurality of data blocks from a data type dimension. Constraint items may be represented as constraints $c^1, \cdots, c^N$, and a data block may be represented as a constant C. The constraint item may be divided into a plurality of sub-constraint items from a constraint type dimension, for example, $c^1$ represents a maximum production quantity of a factory in a day, and $c^2$ represents a maximum cost of products produced in a factory in a day. $c^1$ may be determined as one sub-constraint item, $c^2$ may be determined as one sub-constraint item, or several constraints related to a data block may be determined as one sub-constraint item. For example, a production target is divided based on a product type, computer production and related data are used as one data block, and display production and related data are used as one data block. In this case, several constraints related to computer production may be used as sub-constraint items related to a computer data block, and several constraints related to display production may be used as sub-constraint items related to a display data block.

In a possible implementation, a constraint $c^i$ may be further divided into several sub-constraint items. For example, when the data block is divided in the time dimension, the constraint $c^i$ may also be divided in the time dimension. Specifically, for example, a constraint item of one inventory may be represented as $c^{inv}$: $inv_{t,p,i} = inv_{t-1,p,i} + ib_{t,p,i} - ob_{t,p,i}$, which indicates that current-day inventory=previous-day inventory+inbound quantity-outbound quantity, where i: all products, p: all factories, and t: all time. After the production target is divided based on a quantity of products produced in each phase, corresponding constraints can be further divided based on each phase, for example, $inv_{t,p,i} \rightarrow inv_{t_1\text{-}t_2,p,i} + inv_{t_2\text{-}t_3,p,i} + inv_{t_3\text{-}t_4,p,i} + \cdots$.

A related constant in a C is substituted into a corresponding sub-constraint item, a non-trivial item is screened out from a sub-constraint item into which the constant is substituted, and then a coefficient is selected from the non-trivial item in one sub-constraint item as one row or one column of the constraint matrix, to obtain a constraint matrix A. For example, the constraint matrix A may be represented as follows.

$$
\begin{pmatrix}
1.0 & 0 & 5.0 & 0 & 0 & 0 & 0 & 0 \\
0 & 3.0 & 0 & 0 & 0 & 0 & 11.0 & 0 \\
0 & 0 & 0 & 0 & 9.0 & 0 & 0 & 0 \\
0 & 0 & 6.0 & 0 & 0 & 0 & 0 & 0 \\
0 & 0 & 0 & 7.0 & 0 & 0 & 0 & 0 \\
2.0 & 0 & 0 & 0 & 0 & 10.0 & 0 & 0 \\
0 & 0 & 0 & 8.0 & 0 & 0 & 0 & 0 \\
0 & 4.0 & 0 & 0 & 0 & 0 & 0 & 12.0
\end{pmatrix}
$$

For example, each row or each plurality of rows represents a coefficient in one sub-constraint item. For example, a first row may represent a coefficient obtained after a constant is substituted into a time period $c^1$, a second row represents a coefficient obtained after a constant is substituted into another time period $c^1$, a first column to a third column in the first row and the second row may represent coefficients of a non-trivial item in a first item of $c^1$, a fourth column to a fifth column in the first row and the second row represent coefficients of a non-trivial item in a second item of $c^1$, a third row to a fifth row represent coefficients obtained after a constant is substituted into $c^2$, and so on. Specifically, for example, the first row may represent a maximum production quantity of a factory on a first day, the second row represents a maximum production quantity of a factory on a second day, and each column represents a coefficient corresponding to a variable (for example, an amount of a specific material required for producing a product, and a time required for producing a product). For example, a value in an $i^{th}$ row and a $j^{th}$ column represents a coefficient of a $j^{th}$ variable in an $i^{th}$ constraint.

It may be understood that the objective function corresponding to the service problem may include one or more variables, and the constraint matrix may form the planning model of the service problem in combination with one or more variables included in the objective function corresponding to the service problem. For example, Ax=b, where b is a constant, x is a variable in the objective function corresponding to the service problem, and the service problem can be solved based on the constraint matrix. Specifically, for example, in a factory production scheduling scenario, the variable may include a type, a quantity, a production sequence, or the like of products produced by each machine in the factory every day. As shown in Table 1, the variables in the factory production scheduling scenario may be represented as follows.

**Table 1**

|                    | Day 1     | Day 2     | Day 3     | Day 4     | Day 5     | Day 6     | ...  | Day N     |
|--------------------|-----------|-----------|-----------|-----------|-----------|-----------|------|-----------|
| Production line 1  | $x_{1,1}$ | $x_{1,2}$ | $x_{1,3}$ | $x_{1,4}$ | $x_{1,5}$ | $x_{1,6}$ | ...  | $x_{1,N}$ |
| ...                | ...       | ...       | ...       | ...       | ...       | ...       | ...  | ...       |
| Production line M  | $x_{M,1}$ | $x_{M,2}$ | $x_{M,3}$ | $x_{M,4}$ | $x_{M,5}$ | $x_{M,6}$ | ...  | $x_{M,N}$ |

$x_{1,1}$ indicates a production quantity on a first day in a production line 1, $x_{1,2}$ indicates a production quantity of on a second day in the production line 1, and so on.

304: Obtain, based on the constraint matrix, a value that determines the decision variable, to achieve the solve objective of the service problem.

The constraint matrix may be used to represent a constraint on solving the service problem. After the constraint matrix is obtained, the service problem may be solved under the constraint of the constraint matrix, to obtain the solve objective. In different services, the solve objective may have different service meanings. For example, in a production scheduling service, the solve objective may be a generation plan with a lowest production cost and a shortest production time. In a traffic service, the solve objective may be a traffic light display scheme with a shortest waiting time for vehicles and pedestrians in each direction of an intersection. This is not specifically limited herein.

Therefore, in this implementation of this application, the constant data provided on the service side may be split, to obtain a plurality of data blocks, and the constraint item is correspondingly divided into a plurality of sub-constraint items, so that the plurality of data blocks may be separately processed in parallel, to quickly obtain a constraint matrix on which the service problem depends, thereby efficiently obtaining the solve objective of the service problem, and improving efficiency of solving the service problem. In addition, for some multi-core or multi-thread devices, the service problem is solved by using the method provided in this application, so that a hardware device can be fully used, effective utilization of the hardware device is improved, and working efficiency of the device is improved.

There may be a plurality of specific manners of solving by using the constraint matrix. For example, if the service problem may be represented by using a simple linear relationship, the linear relationship may be directly solved, to obtain a solve objective of the service problem. A specific solve calculation manner may be adjusted based on an actual application scenario. The following uses some specific solving manners as an example for description.

Optionally, the specific solving manners may include: dividing the constraint matrix to obtain a plurality of sub-problems; and separately solving the plurality of sub-problems to obtain a plurality of sub-solve results, where each sub-solve result may include a value of one or more variables in a decision variable, and the plurality of sub-solve results form a solve result of the service problem.

First, the constraint matrix is divided, which can be understood as dividing the service problem into a plurality of sub-problems. For example, a to-be-solved variable is x, the constraint matrix may be represented as A, $Ax \leq b$, and b is a constant. A is divided into a plurality of parts, and one or more parts may be combined with a variable to form a sub-problem expression, so that each sub-problem can be solved based on each sub-problem expression, to obtain a solution to each sub-problem, and solutions to all sub-problems can form a solution to the service problem.

More specifically, the constraint matrix may be divided in a plurality of manners. For example, a value in the constraint matrix may be selected from the constraint item, each column or each row may represent a coefficient value corresponding to a variable, and the constraint matrix may be divided in a row or in a column, so that each type of variable is determined as a sub-problem, or the constraint matrix may be divided in a time dimension. For example, variables in the constraint matrix may be arranged in a time sequence, the constraint matrix may be divided into variables corresponding to a plurality of time periods in the time dimension, and a variable in each time period may be understood as a sub-problem.

Further, after a plurality of sub-problems are obtained through division, the service problem may be solved in a plurality of manners, including but not limited to one or more of the following manners.

1. Each sub-problem is directly solved to obtain a solution to each sub-problem, where the solution to each sub-problem includes a value of one or more variables in the decision variable, and then solutions to sub-problems are fused to obtain a solution to the service problem.

2. Each sub-problem is solved based on a preset order, in a process of solving each sub-problem, all sub-problems that are not solved after the sub-problems are aggregated to obtain an additional sub-problem, and then the additional sub-problem is attached to a current sub-problem to obtain a fused sub-problem. Then the fused sub-problem is solved, and an obtained solution is used as a solution to the current sub-problem. After solutions to all the sub-problems (that is, the value of one or more variables in the decision variables included in the sub-problem) are obtained, the solutions to all the sub-problems are fused to obtain the solution to the service problem.

3. The constraint matrix is aggregated, and solving is performed based on an aggregated matrix, to obtain a guided solution; and then a plurality of sub-problems are solved by using the guided solution as a constraint condition, so that a solution to each sub-problem is closer to the guided solution, to obtain a value of at least one variable of the decision variable included in the plurality of sub-problems.

4. Each sub-problem is solved with reference to the manner 2 and the manner 3 described above. To be specific, the plurality of sub-problems are solved in a preset order by using the guided solution as the constraint condition, to obtain the value of the at least one variable in the decision variable included in the plurality of sub-problems. At least one sub-problem that is arranged after a first sub-problem in the preset order is aggregated, to obtain an additional sub-problem, the first sub-problem is any one of the plurality of sub-problems, and the first sub-problem and the additional sub-problem are fused to obtain a fused sub-problem. The fused sub-problem is solved to obtain a value of at least one variable of the decision variable included in one of the plurality of sub-problems.

Therefore, in this implementation of this application, the constraint matrix may be divided into a plurality of parts, to obtain a plurality of sub-problems, and each sub-problem is solved, thereby improving efficiency of solving the service problem, and quickly obtaining the solution to the service problem.

Optionally, after the service problem is solved to obtain a solve result, the solve result may be further verified for validity of the solve result. When the validity is less than a specific value, the service problem may be solved again, or a service side may be prompted to regenerate data, and the service problem is solved based on the newly generated data, to obtain a usable solution.

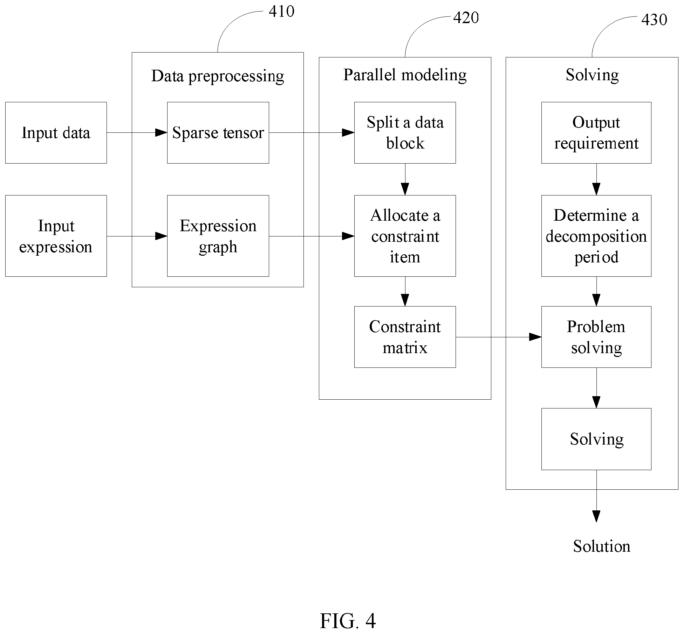

The foregoing describes a procedure of the data processing method provided in this application. The following further describes the procedure of the data processing method provided in this application by using an example with reference to a specific application scenario. FIG. 4 is a schematic flowchart of another data processing method according to this application.

The data processing method provided in this application may be divided into three parts: data preprocessing 410, parallel modeling 420, and solving 430 shown in FIG. 4. This is equivalent to that this application proposes a manner of constructing a planning model in three phases in parallel. The following describes the foregoing steps in detail.

First, input data includes constant data and an input expression (that is, a constraint item).

For example, if a production plan in a period of time needs to be arranged, the constant data may include a quantity of products produced in a period of time, and the input expression may include a production capacity of a device in a factory in a period of time, for example, a corresponding expression such as a quantity of devices, a type of a product produced by each device, duration spent by each device in producing a product, or a relationship thereof. A specific parameter used in the expression, such as a quantity of devices, a type of a product produced by each device, and duration spent by each device in producing a product may be carried in the constant data.

After the constant data and the input expression are obtained, a step of data preprocessing 410 may be performed.

Specifically, a process of data preprocessing 410 may specifically include: converting the constant data into a sparse tensor, converting an input expression into an expression graph, or the like. The expression graph may represent an association relationship between variables in a constraint item and/or between a variable and an item.

For example, an objective function (that is, a model corresponding to a service problem) may be represented as min $\sum_{(i,j)\in E} x_{i,j}$, where $x_{i,j}$ represents a production quantity, and the objective function is a minimum production quantity.

The constant data may be represented as V = {1,2,3,4}, E = {{1,2}, {2,4}, {1,3}, {3,4}}, S = [1,0,0,-1], and a corresponding sparse tensor may be represented as c = $[0,0,0,0,1,0,0,0,1,0,0,0,0,1,1,0]^T$.

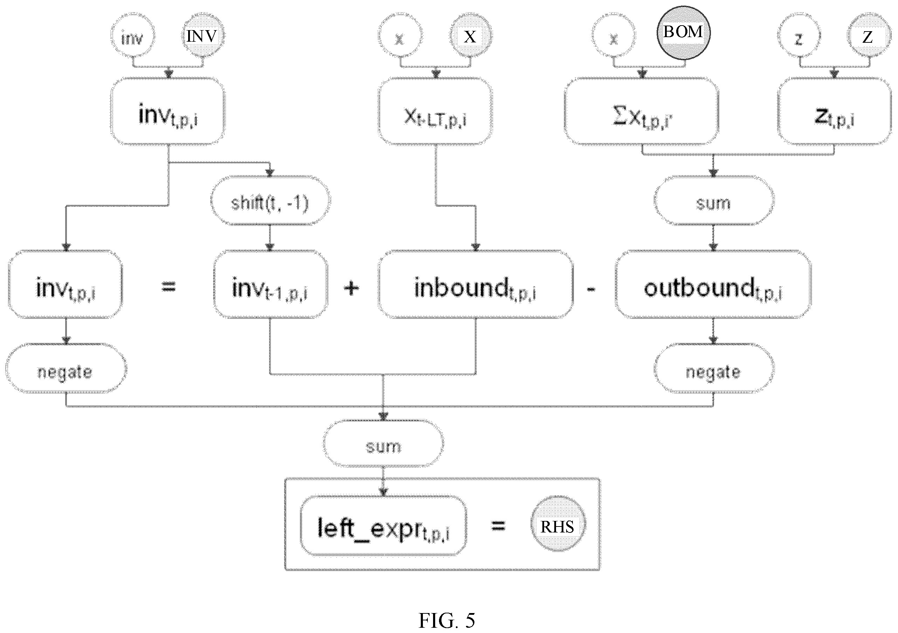

For another example, the constraint item may include a plurality of items, which are represented as expressions such as $c^1, ... , c^N$ respectively. An expression graph obtained after data preprocessing may be shown in FIG. 5, that is, each variable in the constraint item is associated with another variable in the same item after being separately represented, to form a graph form. In this way, a relationship between variables and a relationship between the variable and the item are clearer. What is shown in FIG. 5 may include: Inv: inventory variable; Inv (t, p, i): an ending inventory of a product i in a factory p at time t; x: production variable; LT (p, i): a processing cycle of the product i in the factory p; Inbound: inbound quantity (which may increase the inventory) (for reasons of the processing cycle, products produced at (t-LT (p, i)) will be completed at time t, which increases the inventory), and therefore, the inbound at time t includes x (t-LT (p, i)); Outbound: outbound quantity (which may reduce the inventory), where when a parent item that has a code in a BOM and that corresponds to the product is processed, the product consumes itself, and therefore when I' is the parent item of the product i, a start of I' at time t is the outbound of i, that is, for example, if a screen is i, a mobile phone is i', and the screen is required for processing the mobile phone; Z: demand delivery variable; and Negate, sum, shift: calculation symbols, which are respectively subtraction, sum, and subscript shift. As shown in FIG. 5, shift (t, -1) indicates that inv (t, p, i) is subtracted by 1 in a t dimension, and inv (t, p, t-1) is obtained; and Left expr: left expression of constraint (left expression of constraint), and RHS: right side constant of constraint (right side).

Specifically, for example, one of the constraint items may be represented as $inbound_{t,p,i} = \sum_{(t,p,i,t_2) \in C} x_{t_2,p,i}$, and *inbound* represents an amount entering a warehouse, that is, a sum of production quantity *x*, where t represents time, p represents a factory, i represents all products, t, p, and i are global subscripts, $t_2$ is a local subscript, and C is a constant. The constant usually includes sparse data in a multi-dimensional space, and is represented herein as an example of a set including a four-tuple $(t, p, i, t_2)$. A specific constraint condition may be obtained by substituting the foregoing sparse tensor into a constraint item c. Therefore, in this implementation, subsequent processing may be performed by fully using sparseness of the constant, and the constraint condition is quickly obtained, thereby improving solving efficiency.

In addition, a data preprocessing process may further include other steps, for example, performing anonymization processing and noise reduction processing on data. Specifically, adjustment may be performed based on an actual application scenario. In this application, only conversion of a sparse tensor and conversion of an expression graph are used as examples for description, and this constitutes no limitation.

After data preprocessing 410 is performed to obtain the sparse tensor and the expression graph, a data block is split based on the sparse tensor, and the sparse tensor is split into a plurality of data blocks. Correspondingly, a constraint item related to each data block in the expression graph is also divided into corresponding sub-constraint items, that is, a constraint item is allocated to each data block, and one data block is corresponding to one or more sub-constraint items. In addition, a corresponding compute node such as a CPU, a process, or a thread may be further allocated to each data block. For example, one CPU, one process, or one thread processes one or more data blocks.

A constraint block (that is, a constraint block) may be obtained by substituting a constant in each data block into a sub-constraint item by using the compute node, and a plurality of constraint blocks obtained by substituting a plurality of data blocks into the sub-constraint item may form a constraint matrix.

A process in which a plurality of compute nodes substitute a constant in each data block into a corresponding sub-constraint item may be performed in parallel. For example, one compute node may include one CPU, a first CPU may process a first data block and a corresponding sub-constraint item, and a second CPU may process a second data block and a corresponding sub-constraint item, to quickly substitute the plurality of data blocks into corresponding self-constraint items, thereby improving efficiency of obtaining the constraint matrix.

After the constraint matrix is obtained, a step of solving 430 may be performed.

In an implementation of this application, a rolling horizon manner may be used for solving, and the constraint matrix is divided into a plurality of parts in a time dimension. This is equivalent to dividing the service problem into a plurality of sub-problems in a time dimension, to efficiently obtain an effective solution.

An output requirement for solving may be input by a user, or the output requirement may be generated by a server based on an actual scenario. Specifically, the output requirement may include an efficiency requirement or an optimality requirement of a solution, where the efficiency requirement is a required efficiency range of the solution, and the optimality requirement is a requirement for effectiveness of the solution to the service problem.

Generally, during sub-problem division, a higher efficiency requirement indicates shorter unit duration (that is, duration corresponding to each sub-problem) of division, that is, a shorter decomposition cycle or aggregation cycle indicates higher solving efficiency, thereby improving solving efficiency. However, a longer decomposition cycle indicates more data that is based on for solving and higher efficiency of a solution. Therefore, a proper decomposition cycle or aggregation cycle may be determined based on requirements of efficiency and optimality, to decompose the constraint matrix based on the decomposition cycle, or aggregate the sub-problems based on the aggregation cycle, thereby facilitating solving.

After the decomposition cycle is determined, the service problem can be decomposed. For example, the constraint matrix usually includes a coefficient value corresponding to one or more variables in a period of time. After the decomposition cycle is determined, the constraint matrix may be decomposed in a time dimension based on the decomposition cycle, and then a part obtained after decomposition may be used to form an expression of a sub-problem, to solve the sub-problem and obtain a solution to each sub-problem.

Therefore, in this implementation of this application, data may be decomposed to obtain a plurality of data blocks, and a constraint item is correspondingly divided into a plurality of constraint sub-items. Each data block is corresponding to one or more constraint sub-items, so that the constraint condition is decomposed into a plurality of items, the server can process each data block and the constraint item in parallel, to obtain a corresponding constraint block, thereby implementing conversion from the data block to the constraint block, improving efficiency of obtaining the constraint matrix, and improving efficiency of solving a to-be-solved service problem.

For ease of understanding, the following describes detailed processes of step 420 and step 430 in more detail by using an example.

1. Parallel modeling

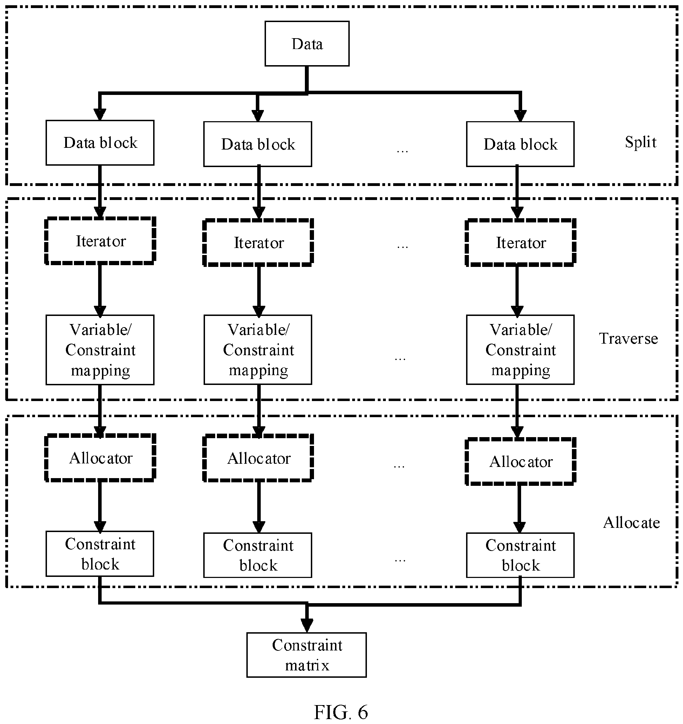

For a detailed process of step 420, refer to FIG. 6, which is described as follows.

Step 420 may be specifically divided into three parts, which are: splitting, traversal, and allocation. The splitting is to split the constant data into a plurality of data blocks, then traverse data in the plurality of data blocks in parallel, map data included in the data blocks to variables in the sub-constraint item, and determine a mapping relationship between the data block and the variable in the sub-constraint item. Then, the data in the data block is substituted into a corresponding constraint item based on the mapping relationship, that is, the data in the data block is allocated to a corresponding sub-constraint item by using a distributor, to obtain a constraint block.

First, the constant data is split into a plurality of data blocks. A specific classification manner may be dividing based on a data size, a data type, a data amount, a preset cycle, a related variable in a constraint item, or the like. For example, every 1000 pieces of data are determined as one data block, or each type of data is determined as one data block, or data in each preset cycle is determined as one data block, or data that is in the constant data and that is of a same type as a variable included in each item of the constraint item is determined as one data block.

Correspondingly, after the data block is split, the constraint item is also divided into a plurality of sub-constraint items accordingly. Each sub-constraint item is corresponding to one or more data blocks. Then, the constraint block and the corresponding data block may be allocated to a corresponding CPU, thread, or the like. In this application, an example in which the constraint block and the corresponding data block are allocated to a corresponding CPU is used for description.

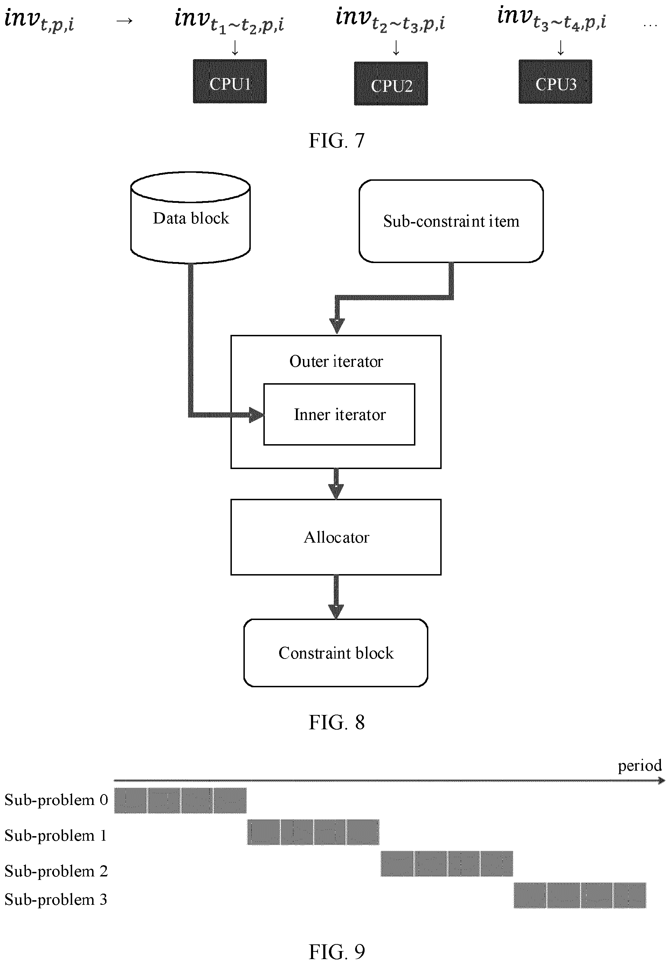

For example, as shown in FIG. 7, a constraint item of an inventory may be represented as: $c^{inv}$: $inv_{t,p,i} = inv_{t-1,p,i} + ib_{t,p,i} - ob_{t,p,i}$, that is, indicating that Inventory of a current day=Inventory of a previous day+Inbound quantity-Outbound quantity, where i: all products, p: all factories, and t: all times. An inventory is divided into a plurality of sub-constraint items based on a specific cycle, for example, $inv_{t,p,i} \rightarrow inv_{t1-t2,p,i} + inv_{t2-t3,p,i} + inv_{t3-t4,p,i} + \cdots$. Then, as for each sub-constraint item, for example, $inv_{t1-t2,p,i}$ is allocated to a CPU *1*, $inv_{t2-t3,p,i}$ is allocated to a CPU 2, and $inv_{t3-t4,p,i}$ is allocated to a CPU 3.

Specifically, for example, an expression graph of the constraint item may be represented as $inbound_{t,p,i} = \sum_{(t,p,i,t2) \in C} x_{t2,p,i}$. When the constant data is split, variables that are related to the constant data and that are used in the constraint item of the expression graph may be classified, for example, the variables are divided into a plurality of parts based on a global subscript, that is, a plurality of sub-constraint items. Then the constant data is divided into a plurality of data blocks based on classification in the constraint item, and data corresponding to each classification in the constant data is determined as one data block, to obtain a plurality of data blocks.

Then, the constraint item is traversed through an iterator, and the data in the data block is mapped to the variables in the sub-constraint item. After the traversal is completed, the data in the data block is substituted into the corresponding sub-constraint item by using the allocator, to obtain the corresponding constraint block. According to a splitting mechanism provided in this application, equivalence between data splitting and constraint splitting is ensured, so that data and constraints can be synchronized, thereby improving efficiency and feasibility of parallel processing.

After the constant data is split to obtain a plurality of data blocks and a relationship between the data block and the sub-constraint item is traversed, one or more data blocks and a corresponding sub-constraint item may be allocated to a corresponding CPU, thread, or the like, and then the plurality of data blocks are processed in parallel. A process in which each CPU or thread processes one or more data blocks may be considered as a path. The following is an example of one of paths.

For example, specific steps of traversal and allocation in one path may be shown in FIG. 8.

An input of the path is one or more data blocks and one or more corresponding sub-constraint items. The iterator is configured to traverse the sub-constraint item and search for a mapping relationship between each piece of data in the data block and the variable in the sub-constraint item.

First, the iterator includes two layers: an outer iterator and an inner iterator shown in FIG. 8. The outer iterator preferentially traverses an abstract expression in the sub-constraint item, and the inner iterator is configured to traverse a constant in the sub-constraint item and record a correspondence between an identifier and a value of the constant. The identifier herein may be the global subscript of the constant, an allocated subscript, or the like. In the following implementation, an example in which the identifier is the global subscript is used for description. When a variable is traversed, a recorded global subscript of the constant and a corresponding value are added to a current variable.

The allocator is configured to extract a variable generated by the iterator and a corresponding global subscript, and allocate the variable to each sub-constraint item based on a value of the global subscript, to obtain the constraint block. Therefore, this application provides a two-layer iteration mechanism, to construct the constraint item one by one, thereby obtaining a constraint block that is obtained after a constant is substituted.

That is, a mapping relationship between data in the data block and each variable in the sub-constraint item is found by using the inner iterator and the outer iterator, and then the data in the data block is allocated to the sub-constraint item by using the allocator, to obtain the constraint block.

Specifically, for example, the constraint item may be represented as: $c^{inv}$: $inv_{t,p,i} = inv_{t-1,p,i} + ib_{t,p,i} - ob_{t,p,i}$. One sub-constraint item $ib_{t,p,i}$ is taken as an example, the outer iterator traverses items included in the expression, and then the inner iterator further traverses the items, that is, traverses constants (specifically, a constant in a sum symbol) in the

| $t$ | $p$ | $i$ | $t_2$ |
|---|---|---|---|
| 1 | 0 | 1 | 0 |
| 2 | 1 | 0 | 1 |
| 2 | 1 | 0 | 2 |

items, for example, $ib_{t,p,i} = \sum_{(t,p,i,t_2) \in C} x_{t_2,p,i}$, traverses constant values in the items, for example, $\begin{array}{cccc} 2 & 1 & 0 & 2 \end{array}$, to establish a mapping relationship between the variable and the constraint, for example:

$$x_{0,0,1} \rightarrow inv_{1,0,1}$$
$$x_{1,1,0} \rightarrow inv_{2,1,0}$$
$$x_{2,1,0} \rightarrow inv_{2,1,0}$$

Then, the variable in the data block is allocated to the corresponding sub-constraint item to obtain the constraint block, for example:

$$inv_{1,0,1} = x_{0,0,1} + \cdots$$

$$inv_{2,1,0} = x_{1,1,0} + x_{2,1,0} + \cdots$$

After the plurality of constraint blocks are obtained, the plurality of constraint blocks may be combined. For example, if a constraint block 1 includes two constraints $z_1 = x_1 + y_1$, $z_2 = x_2 + y_2$, and a constraint block 2 includes two constraints $z_3 = x_3 + y_3$, $z_4 = x_4 + y_4$, a combined result includes four constraints $z_1 = x_1 + y_1$, $z_2 = x_2 + y_2$, $z_3 = x_3 + y_3$, $z_4 = x_4 + y_4$. Therefore, a complete constraint matrix is output, and the constraint matrix can form an expression representing the service problem.

Therefore, in this implementation of this application, the data block and the sub-constraint item may be converted into the constraint block in a parallel manner, and the plurality of constraint blocks may be combined to obtain the constraint matrix used to solve the service problem, thereby improving efficiency of obtaining the constraint matrix. Especially in a scenario in which a large amount of data is processed, a parallel processing manner can be used to greatly improve efficiency of obtaining the constraint matrix, improve CPU utilization of a device, and reduce a resource waste. In addition, in this application, an abstract expression is traversed through outer iteration, and constant data in a sub-constraint item is traversed through inner iteration, to ensure that an expression item for constructing the constraint block is non-trivial (that is, a variable whose coefficient is not 0), and a valid constraint block is screened out. In addition, context information is recorded when the expression item is constructed, and a constraint subscript in the expression is inferred and marked. After all items are constructed, constants are allocated to corresponding constraint items in a marked constraint subscript manner to obtain the constraint block, thereby reducing an error rate. In an actual application scenario, for an ultra-large-scale planning model in the industry, a constraint subscript space is extremely large, which is usually a scale of hundreds of millions. An expression form is randomly given by a user, and there are difficulties such as a sum symbol nesting and a large sum range. Therefore, in this implementation of this application, not only data sparseness is fully utilized when a model for solving a problem is constructed, but the model can be constructed by traversing the data once (instead of traversing an entire constraint subscript space). Construction efficiency is high, and parallelization is supported to adapt to an industrial hardware environment, thereby improving resource utilization.

2. Solve

After the constraint matrix is obtained, the constraint matrix may be split, the service problem is divided into a plurality of sub-problems by splitting the constraint matrix, and then the sub-problems are separately solved, to reduce solving complexity and improve solving efficiency.

A solving process in the data processing method provided in this application may be applied to a scenario in which a linear programming problem may be divided into a plurality of phases in a time dimension for solving. For example, the data processing method provided in this application may be applied to solving a production arrangement of a factory within one month. The production arrangement of one month may be divided into three phases of production plans, and each phase has 10 days, that is, production plans of every 10 days are solved separately.

A difference between a result obtained by splitting the constraint matrix and the foregoing constraint block lies in that splitting granularities, splitting dimensions, or the like are different. For example, a granularity for splitting the constraint matrix is greater than a size of the constraint block. Therefore, after the constraint matrix is obtained, the constraint matrix may be further divided based on different dimensions or different granularities, to facilitate subsequent solving.

Specifically, when the constraint matrix is split, the constraint matrix may be split in a time dimension. For example, a constraint matrix corresponding to a time period [t1, t2] is divided into problems of sub-problems in two time periods [t1, t3] and [t3, t2], and then the sub-problems are separately solved. When the constraint matrix is divided in a time dimension, a decomposition cycle may be determined based on a user requirement, and the decomposition cycle is usually in a negative correlation with solving efficiency. For example, if a user requirement is to improve efficiency, a relatively small cycle may be determined, to improve solving efficiency, and if the user requirement is to improve optimality of a solution, a decomposition cycle may be reduced, so that when each sub-problem is solved, more adjacent information may be combined to improve effectiveness of an obtained solution. For example, if the user requires a 50% increase in the solving efficiency, it may be determined that the decomposition cycle is 5 minutes, thereby improving the solving efficiency.

There may also be a plurality of manners for solving the plurality of sub-problems. The following uses several possible solving manners as examples for description.

Solving manner 1: Rolling horizon (rolling horizon, RH) decomposition algorithm

After the plurality of sub-problems are obtained, each sub-problem may be directly solved, to obtain a solution to each sub-problem, that is, a solution to one or more variables in the decision variable included in each sub-problem. The solution to the service problem can be obtained by fusing solutions to all sub-problems.

Generally, most industrial problems usually have a sequence structure. For example, assembly steps need to be performed in sequence for manufacturing, and logistics transportation needs to be arranged in a specific time series. Therefore, a decision procedure (that is, a process of solving the service problem) is usually ordered, for example, an operation sequence or a time sequence. For a large-scale mixed integer linear programming problem with sequence structure, efficiency is low if it is solved directly, so the rolling horizon (rolling horizon) decomposition algorithm can be used to solve the problem, and a final solution can be obtained quickly.

Specifically, the problem may be split into a series of sub-problems. Each sub-problem solves only variables included in a part of the sequence, and other unsolved parts of the sequence are aggregated, and may be divided into a forward rolling horizon algorithm, a backward rolling horizon algorithm, and the like based on an aggregation manner.

For example, for a solving manner of the forward rolling horizon algorithm, refer to FIG. 9. A problem of a T period is divided into four sub-problems, that is, the constraint matrix is divided into a plurality of parts. For example, a to-be-solved variable is x, the constraint matrix may be represented as A, $Ax \leq b$, and b is a constant. A is divided into a plurality of parts to form an expression of the sub-problem. The variable included in each sub-problem is solved to obtain a solution to each sub-problem, and then solutions to the sub-problems are fused to obtain the final solution. A fusion manner may be weighted fusion, or may be direct superposition, and may be specifically adjusted based on an actual application scenario.

Therefore, in this implementation of this application, the service problem may be solved by using a rolling horizon method, and the constraint matrix on which the service problem depends is split, to obtain a plurality of sub-problems. Each sub-problem is solved, thereby improving efficiency of solving the service problem, and efficiently obtaining a solve objective.

Solving manner 2: Future aggregation rolling horizon (future aggregation rolling horizon, FARH)

Similar to the foregoing manner 1, the constraint matrix is divided into a plurality of parts to obtain a plurality of sub-problems. A difference lies in that, when each sub-problem is solved, other sub-problems may be aggregated to obtain aggregation information, then each sub-problem and the aggregation information is aggregated, and aggregated data is solved, to obtain a solution to each sub-problem, and solutions to all sub-problems are aggregated, to obtain the final solution to the service problem. A manner of aggregating sub-problems or service problems mentioned in this application may include a manner of summation, weighted summation, or weighted averaging for aggregation. For example, production requirements of a plurality of days after a sub-problem may be summed to obtain future information. For another example, weighted average is performed on a production cycle of each factory.

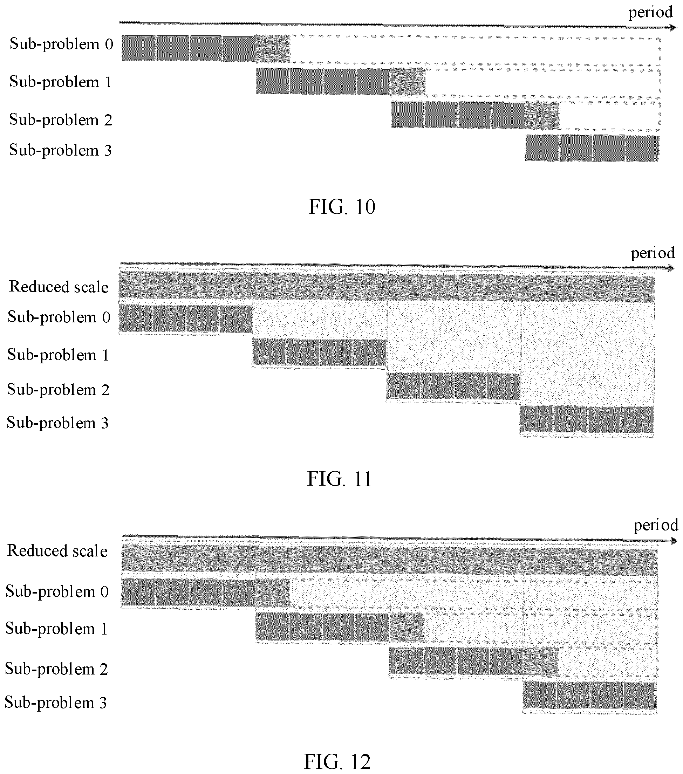

For example, as shown in FIG. 10, a problem of a T period is divided into four sub-problems, which is equivalent to dividing the constraint matrix into a plurality of parts. When a sequence block of a first sub-problem is solved, subsequent sequence blocks that are not solved are aggregated into one period, and are combined with a first sequence block for solving. When a second sub-problem is solved, a solution to the first sequence block is fixed first, the sequence blocks that are not solved are aggregated, and then a second sequence block is solved with aggregated sequence blocks, and so on until a last sub-problem. In a process of solving the last sub-problem, a solution to a previously solved sub-problem is fixed, and a last sequence block is solved.

Specifically, for example, a problem in a period of time, for example, a T period, is divided into N sub-problems. When a sub-problem in a $t_p$ - $t_q$ period is solved, all pieces of data in a $t_{q+1}$ - $t_N$ period are aggregated into 1 period, and is attached to an original sub-problem, to solve a sub-problem in a $t_p$ - $t_q$ period, until all the sub-problems are solved. Solutions to all the sub-problems are fused, for example, weighted fusion or superposition, to obtain the solution to the service problem.

Therefore, in this implementation of this application, after the service problem is divided, other sub-problems may be aggregated, so that each sub-problem may be solved with reference to global information, so that a solution to each sub-problem is more accurate. It is equivalent to providing a guiding mechanism, and introducing future information in a rolling solving process, so that a finally obtained solution is more accurate.

Solving manner 3: Guided rolling horizon (guided rolling horizon, GRH) algorithm added with a main problem

Similar to the foregoing manner 1, the constraint matrix is divided into a plurality of parts to obtain a plurality of sub-problems. A difference lies in that to-be-resolved problems are solved after being aggregated, that is, the constraint matrix is aggregated, and then solved based on an aggregated matrix. The aggregated matrix is equivalent to a compressed constraint matrix, that is, the aggregated matrix is less than the constraint matrix before being split. Then, a solution (that is, a guided solution) obtained based on the aggregated matrix is used as a constraint to solve each sub-problem, so that solutions to the plurality of sub-problems are fused and close to the guided solution, for example, the solutions to the plurality of sub-problems obtained after being fused are in a specific range adjacent to the guided solution, or the solutions to the plurality of sub-problems obtained after being superposed are in a specific range adjacent to the guided solution.

For example, as shown in FIG. 11, the problem of the T period is divided into four sub-problems. If the service problem is in the T period, each h period is aggregated into a small problem to obtain $\lceil T/h \rceil$ period of small problems. The $\lceil T/h \rceil$ period of small problems together form a smaller-scale main problem, that is, the scale of the main problem is smaller than the scale of the service problem, and h is a positive integer greater than 1. Then, a solution to a smaller-scale main problem is solved, that is, the scale of the main problem is smaller than the scale of the service problem, in other words, the main problem is a compressed service problem. Then, similar to the RH algorithm, the sub-problem in the h period is solved in sequence. A difference lies in that, in a solving process, a solution to the main problem is used to "guide" a sub-problem solving process, which is equivalent to adding the solution to the smaller-scale main problem as a constraint, so that the solution to the sub-problem is as close as possible to the solution to the main problem.

Therefore, in this manner, the solution to the main problem is added to guide the solving process of the sub-problem, so that the solution to the sub-problem is closer to the solution to the main problem, and effectiveness of a finally obtained solution is improved. In addition, compared with the solving manners in the manner 1 and the manner 2, the solving manner in the manner 3 avoids a problem that a long-cycle association cannot be captured, so it is easy to fall into local optimality and/or an infeasible solution easily occurs. The solution to the main problem is used to guide solving of a local problem, thereby improving effectiveness of a finally obtained solution. It is equivalent to providing an aggregation mechanism, to generate a relatively small-scale linear programming main problem, solve the small-scale main problem, and use the solution to guide derivation of each sub-problem and form a constraint on a solution to the sub-problem, so that in a rolling solving process, the solution to the sub-problem is kept close to that of the main problem. Model data of linear programming is aggregated, so that a global feature is maintained while a scale of the main problem is reduced, and the solution to the sub-problem is more accurate.

Solving manner 4: Fusing FARH and GRH

Manner 4 may be understood as fusion of the foregoing solving manner 2 and solving manner 3. To be specific, when each sub-problem is solved, other sub-problems may be aggregated to obtain aggregation information, then each sub-problem and the aggregation information is fused, and fused data is solved, to obtain a solution to each sub-problem. In addition, when the sub-problem is solved, the to-be-solved problem is further solved after being aggregated, that is, the constraint matrix is aggregated, and then is solved based on an aggregated matrix. For ease of distinction, a solution obtained based on the aggregated matrix is referred to as a guided solution, and then the guided solution is used as a constraint to solve each sub-problem fused with the aggregation information, so that the solutions to the plurality of sub-problems obtained after being fused are close to the guided solution, thereby improving effectiveness of the final solution. It is equivalent to adding an additional constraint and target when solving the sub-problem, so that a sum of solutions to the sub-problems is constrained, in an adjustable intensity manner, to be closer to the solution to the main problem along a time dimension.

For example, as shown in FIG. 12, the service problem is aggregated from the T period to a main problem with a reduced scale in the $\lceil T/h \rceil$ period, and then a solution to a smaller-scale main problem is obtained. The problem in the T period is divided into four sub-problems, that is, the constraint matrix is divided into a plurality of parts. When a sequence block of a first sub-problem is solved, subsequent sequence blocks that are not solved are aggregated into one period, and are combined with the first sequence block for solving. Then, the sub-problems that aggregate unsolved sequences are separately solved by using the solution to the smaller-scale main problem as a constraint, so that the obtained solution to the sub-problem is closer to the solution to the smaller-scale main problem.

Therefore, in this manner, FARH and GRH are fused, so that future information of the service problem is fused when the service problem is solved in local units, and the solution to the main problem obtained after aggregation is added as a constraint to solve each sub-problem, thereby improving effectiveness of the final solution. It is equivalent to using future information of each sub-problem and information of the main problem at the same time, and minimizing an optimality loss of the solution.

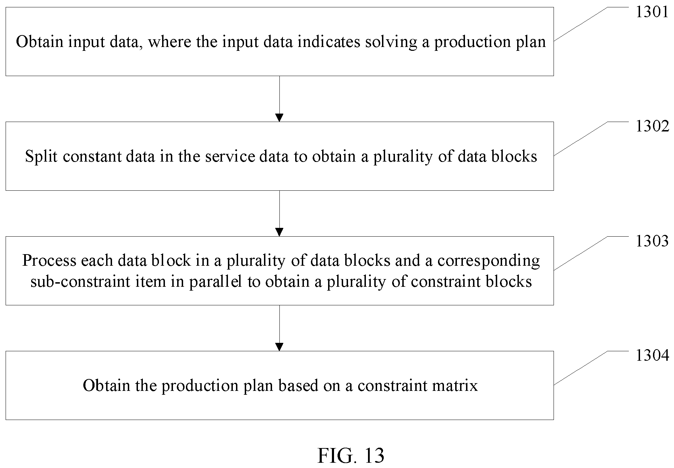

The foregoing describes in detail a procedure of the data processing method provided in this application. The following describes, with reference to FIG. 13, a procedure of a method for generating a production plan provided in this application.

It should be understood that the method for generating a production plan provided in this application is associated with the foregoing data processing method. The foregoing service problem is converted into a specific production scheduling problem, and the constant data is converted into a specific quantity of products to be produced and a parameter for producing the product, which is described in detail as follows.

1301: Obtain input data, where the input data indicates solving a production plan.

The input data may include the foregoing service data and at least one constraint item.

The step is similar to step 301, and a difference lies in that a service problem corresponding to the service data is indicating solving the production plan for producing a product. Constant data included in the service data includes a production target of a to-be-produced product in a period of time and/or a parameter for producing the product, or the like. The production target is a minimum quantity, a maximum quantity, or the like of the to-be-produced product, the production target may be represented by using an objective function, the objective function has a to-be-solved decision variable, and a value of the decision variable obtained after solving can form the production plan.

For example, the constant data may include a target quantity of products that are required to be produced in March, a quantity of factories, a quantity of production lines of each factory, a material, a cost, or a cycle required for producing a product, or the like.

1302. Split the constant data in the service data to obtain a plurality of data blocks.

The constant data in the service data, such as a production target or a parameter for producing a product, is split based on a data type, a time dimension, or the like, to obtain the plurality of data blocks.

For example, the constant data may include a target quantity of products that are required to be produced in March, a quantity of factories, a quantity of production lines of each factory, a material, a cost, or a cycle required for producing a product, or the like. These pieces of information may be split based on a data type to obtain the plurality of data blocks.

1303. Process each data block in a plurality of data blocks and a corresponding sub-constraint item in parallel to obtain a plurality of constraint blocks.

Then, a plurality of compute nodes are used to fuse the plurality of data blocks and the corresponding sub-constraint items in parallel to obtain the plurality of constraint blocks.

1304. Obtain the production plan based on a constraint matrix.

The plurality of constraint blocks obtained in step 1303 may form the constraint matrix, and then the production plan may be solved based on the constraint matrix, to efficiently obtain a better production plan.

Step 1302 to step 1304 are similar to step 302 to step 304. Similar parts are not described herein in this application. The following describes some differences.

When the constraint matrix is divided in a time dimension to obtain a plurality of sub-problems, the service problem indicates that the production plan in a preset time period in the time dimension is to be solved, and each sub-problem may indicate a production plan for producing a product in a corresponding time period. For example, the service problem is to solve a production plan of a factory in a next month, and the service problem may be divided into five sub-problems, that is, a production plan of every six days. Then, the service problem may be solved based on the solving manner shown in FIG. 4 to FIG. 12.

Therefore, in this implementation of this application, a service side can provide a production target related to a product for which a production plan needs to be arranged and a production-related parameter, and then data provided on the service side may be split, to obtain a plurality of data blocks, and the constraint item is correspondingly divided into a plurality of sub-constraint items, so that the plurality of data blocks may be separately processed in parallel, to quickly obtain a constraint matrix on which the service problem depends, thereby efficiently obtaining a solve objective of the service problem, and improving efficiency of solving the service problem. In addition, for some multi-core or multi-thread devices or a plurality of devices, such as a server cluster, a service problem is solved by using the method provided in this application, so that a hardware device can be fully used, effective utilization of the hardware device is improved, and working efficiency of the device is improved. For example, the method provided in this application may be executed by a server, and the plurality of compute nodes may include a plurality of servers, or a plurality of processors in the server, or a plurality of processes in at least one processor in the server, or a plurality of threads in at least one processor, to have a capability of processing data in parallel. Through the method in this application, a plurality of data blocks can be processed in parallel, to effectively obtain the constraint matrix.

For further ease of understanding, the following describes application scenarios of the data processing method and the method for generating a production plan provided in this application by using examples.

For example, the data processing method and the method for generating a production plan provided in this application may be applied to supply-demand simulation. For a supply chain, different supply-demand matching problems may be derived from factors such as a difference in a supply-demand object, a difference in time granularity, a difference in a quantity of constraint conditions, or a difference in a customer orientation. Therefore, various supply-demand matching problems exist in different domains or even in each domain. It is difficult to quickly respond to and make a proper decision under changing conditions. In addition, there may be a large quantity of products, large demand quantity, and complex production relationships. Therefore, this process requires a more efficient and accurate decision method.

Specifically, for example, the data processing method provided in this application may be applied to a plurality of problems that can be solved by using linear programming, for example, a production planning problem in a supply chain and a constrained routing problem in a network. A form of linear programming may be represented as follows.

Objective function: $\min c^T x$

Constraint items: s. t. $Ax \geq b$; and $x \geq 0$.

x is a variable, that is, a quantity that needs to be determined in the service problem; and A, b, c are usually known constants, where A is a coefficient matrix, b is a resource limit, and c is a target coefficient.

The following uses a specific application scenario as an example for description.

1. Production plan

The production plan in the supply chain is a special type of supply-demand matching problem with an aim of determining how to make the best use of raw materials to meet a customer requirement. The decision procedure involves production, transportation, procurement, and the like, and is restricted by an upper limit of factory production capacity, goods processing structure, and the like. For example, the production target may include 2000 desktop computers, 1000 displays, and 800 laptop computers. There are two factories, each with a processing capacity of 1000 PCS/day, and it is known that one display is required to process one desktop computer. When the production plan is considered, it is required to decide a processing order, a processing amount, a processing time, and a processing place of the desktop computer, the display, and the laptop computer.

To solve this type of problem, a linear programming manner may be usually used to perform modeling and solving on the problem. However, in an actual scenario, a service problem is large in scale, and therefore a modeling process needs to be accelerated. In addition, this type of problem is generally constrained by a time dimension of an "inventory update equation", and the RH algorithm decomposes a model from the time dimension. Therefore, this type of problem can be adapted to the production plan. For example, the following model is a planning model for the production planning problem, and is represented as follows.

Objective function:

$$\min \sum_{t=1}^{n}(p_t x_t + h_t s_t + q_t y_t)$$

Constraint items:

$$\text{s.t.}\, s_t + x_t = d_t + s_t (t = 1, \ldots n)$$

$$s_0 = s_n = 0,$$

$$x_t \le M_t y_t, (t = 1, \ldots, n),$$

$$x \in \mathbb{R}_+^n,$$

$$s \in \mathbb{R}_+^{n+1},$$

$$y \in \{0,1\}^n$$

t represents a time dimension, and a production quantity in an n period needs to be determined in the problem; $p_t$, $q_t$, $h_t$, $d_t$ is a constant in the problem, and respectively represents a unit production cost, a fixed production cost, a unit inventory cost, and a requirement at a time t; and $x_t$, $y_t$, $s_t$ is a variable in the problem, where $x_t$ represents a production quantity at a time t, $s_t$ represents an ending inventory at a time t, and $y_t$ represents whether goods are produced at a time t.

A first item in the constraint item is the "inventory update equation", indicating a remaining inventory at the end of the time t, which is equal to a remaining inventory at the end of time t-1 plus an inventory increase amount at the time t and minus an inventory decrease amount at the time t.

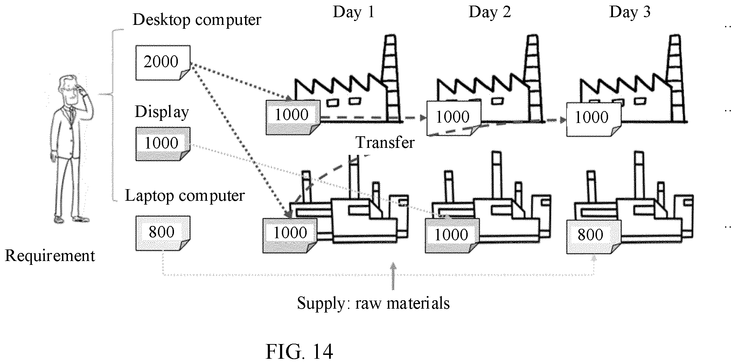

For example, a solution obtained by adapting a production planning problem planning model to the instance and performing solving may be shown in FIG. 14. The solution includes a processing order, a processing amount, a processing time, a processing place, and the like of a desktop computer, a display, and a laptop computer. For example, 1000 displays are separately produced in two factories on a first day, then one of the factories separately uses 2000 displays produced on the first day to produce desktop computers on a second day and a third day, and the other factory separately produces 1000 displays and 800 laptop computers on the second day and the third day.

Therefore, in this implementation of this application, the constant data may be split, and then the data block and the corresponding sub-constraint item are separately processed in parallel, to quickly obtain the constraint matrix, and further perform solving, thereby improving efficiency of obtaining the constraint matrix. Especially for a large-scale linear programming problem, a parallel processing manner can be used to greatly improve solving efficiency, hardware resources of a device are fully utilized, and a resource waste is reduced.

2. Logistics planning

The scheme provided in this application may be applied to various problems that can be solved through linear programming, for example, a network flow problem in a logistics field. Herein, a minimum-cost flow problem (minimum-cost flow problem) in a network flow is used as an example for description.

The minimum-cost flow problem is to find an optimal path in a flow network to deliver a specified quantity of supplies with a specified start to a specified end. A path may have a plurality of points, and a cost exists between two points. Therefore, the optimal path is usually a path with a minimum total transportation cost.

A planning model may be described as follows: if there is a flow network $G = (V, E)$, $V$ represents all transport nodes, $s \in V$ is a start point, $t \in V$ is an end point, and E represents all edges, that is, a connection line between points. $a(u, v)$ and $f(u, v)$ are respectively defined as a unit transportation cost and a transportation quantity from a node u to a node $v$. When a required quantity of transportation quantity is d, a problem planning model is as follows:

an objective function is represented as: (for example, minimizing a total transportation cost) $\sum_{(u,v)\in E} a(u, v). f(u, v)$

The constraint item is represented as:

$$f(u,v) \leq c(u,v)$$

$$f(u,v) = -f(v,u)$$

$$\sum_{w \in V} f(u,w) = 0 \; for \; all \; u \neq s,t$$

$$\sum_{w \in V} f(s,w) = d \; and \; \sum_{w \in V} f(w,t) = d$$

A first constraint item is "an upper limit of transportation quantity", that is, there is an upper limit for the transportation quantity between two points; a third constraint item is "a flow conservation constraint"; and a fourth constraint item indicates that an inflow quantity of the start point and an outflow quantity a key point should be equal to the required quantity d.

According to the method provided in this application, the constant data and an expression of the constraint item may be quickly fused in parallel by using a plurality of compute nodes, to obtain the constraint matrix. Then, an optimal transportation path can be obtained based on solving the constraint matrix.

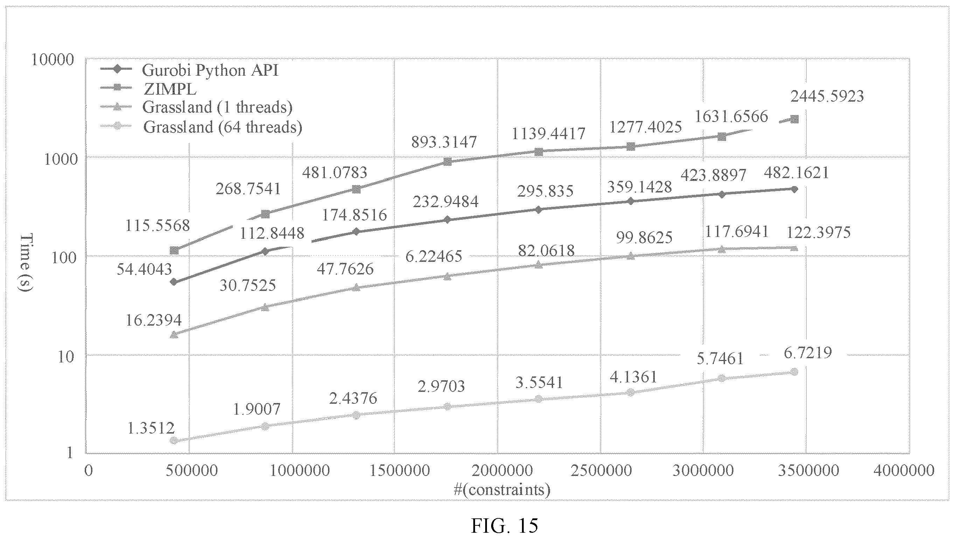

For ease of understanding an effect of the data processing method provided in this application in a modeling part, modeling efficiency of the data processing method provided in this application is compared with some common modeling manners. As shown in FIG. 15, a result of comparing performance of the modeling part of the data processing method provided in this application in single-threaded and 64-threaded scenarios with modeling efficiency of Gurobi Python API and ZIMPL is shown in FIG. 15. It can be learned from FIG. 15 that, compared with the modeling efficiency of Gurobi Python API and ZIMPL, modeling efficiency of a single-thread version in this application can be improved by one order of magnitude. Because parallel processing is supported, modeling efficiency of a multi-thread version is further improved, an acceleration rate reaches 50 to 80 times, and a million-scale planning model can be constructed within 10 seconds.

In a solving part, solving effects of the plurality of solving manners provided above are compared. For details, refer to Table 2.

**Table 2**

| | Model constructing time (second) | Model solving time (second) | Total time | Target value | Requirement fulfillment rate |
|---|---|---|---|---|---|
| Direct solving | 3.12 | 3135.16 | 3138.28 | 5.15626e+09 | 13.29% |
| RH | 4.94 | 40.80 | 45.74 | (+7.45%) 5.54017e+09 | 9.68% |
| FARH | 8.54+6.78 | 67.68 | 83.00 | (+0.81%) 5.19818e+09 | 13.67% |
| GRH | 28.84+8.79+6.20 | 73.31 | 117.14 | (+2.11%) 5.26513e+09 | 11.51% |
| G-FARH | 30.99+11.07+7.43 | 167.62 | 217.11 | (+0.36%) 5.17477e+09 | 13.05% |

The target value indicates that a value of an objective function obtained through solving is obtained by weighting. A smaller value of the objective function usually indicates a better effect. Generally, a solution obtained through direct solving is the most accurate, and a larger computing power is consumed in direct solving. A value in () of the target value indicates an optimality loss of the solution. At same efficiency, a smaller optimality loss is better. The requirement fulfillment rate indicates a completion degree to which the production target is met on time.

Apparently, it can be learned from Table 2 that a main-sub guiding idea proposed in this application can significantly improve optimality of an original rolling horizon algorithm. A common full-scale direct solving takes 52 minutes, and several different rolling horizon algorithms take 1 to 4 minutes, where an optimality loss of G-FARH (that is, the foregoing solving manner 4) is the smallest, and is only 0.36%. In an actual application, an algorithm may be selected based on different requirements of efficiency and optimality, for example, a splitting cycle or an aggregation cycle is adjusted.

The foregoing describes in detail the procedure of the data processing method provided in this application. The following describes, based on the procedure of the data processing method, a data processing apparatus provided in this application. The data processing apparatus may be configured to perform method steps in FIG. 3 to FIG. 13.

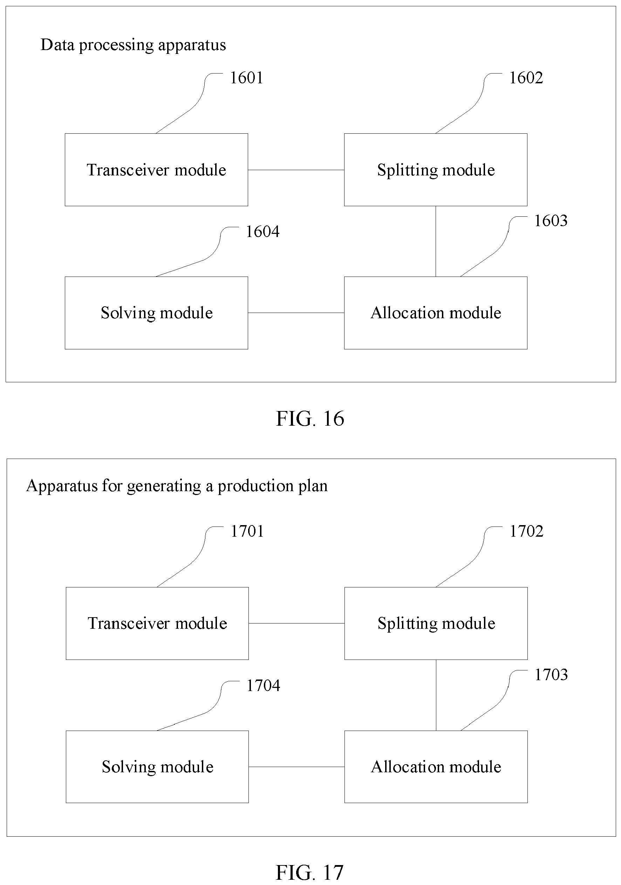

FIG. 16 is a schematic diagram of a structure of a data processing apparatus according to this application.

The data processing apparatus includes:

a transceiver module 1601, configured to: obtain service data used to define a service feature, where the service data includes constant data, the service data is used to solve an objective function, the objective function indicates a solve objective of a service problem, and the objective function includes a decision variable related to the service feature, where

the transceiver module 1601 is further configured to obtain at least one constraint item, where the constraint item includes a constraint relationship between the decision variable and the constant data;

a splitting module 1602, configured to split the constant data to obtain a plurality of data blocks, where each data block is corresponding to at least one sub-constraint item, and the at least one sub-constraint item includes a constraint relationship between split constant data and the decision variable;

an allocation module 1603, configured to allocate the plurality of data blocks to a plurality of compute nodes, so that the plurality of compute nodes generate a plurality of constraint blocks in parallel based on the plurality of data blocks and corresponding sub-constraint items, where data in the plurality of constraint blocks forms a constraint matrix; and

a solving module 1604, configured to determine a value of the decision variable based on the constraint matrix to achieve the solve objective of the service problem.

In a possible implementation, the allocation module 1603 is specifically configured to allocate a first data block to a first compute node, so that the first compute node performs the following steps: substituting the first data block into a target sub-constraint item to obtain a sub-constraint expression, where the first data block is any one of the plurality of data blocks, the target sub-constraint item is a sub-constraint item that is in the plurality of sub-constraint items and that is corresponding to the first data block; screening and obtaining a non-trivial item from the sub-constraint expression, where the non-trivial item in the sub-constraint expression includes at least one variable in the decision variable; and parsing the non-trivial item to obtain a constraint block.

In a possible implementation, the solving module 1604 is specifically configured to: divide the constraint matrix in a time dimension to obtain a plurality of sub-problems; and then separately solving the plurality of sub-problems to obtain a value of a decision variable, where the value of the decision variable forms the solve objective of the service problem.

In a possible implementation, the solving module 1604 is specifically configured to: aggregate the constraint matrix, and solve the aggregated matrix to obtain a guided solution; and solve the plurality of sub-problems by using the guided solution as a constraint condition, to obtain the value of the decision variable in the plurality of sub-problems.

In a possible implementation, the solving module 1604 is specifically configured to solve the plurality of sub-problems in a preset order by using the guided solution as the constraint condition, to obtain a value of at least one variable of the decision variable included in the plurality of sub-problems, where at least one sub-problem arranged after a first sub-problem in the preset order is aggregated to obtain an additional sub-problem, the first sub-problem is any one of the plurality of sub-problems, the first sub-problem and the additional sub-problem are fused to obtain a fused sub-problem, and the fused sub-problem is solved to obtain a value of at least one variable of the decision variable included in one of the plurality of sub-problems.

In a possible implementation, the solving module 1604 is specifically configured to: obtain user input data; determine a decomposition cycle based on the user input data; and decompose the constraint matrix based on the decomposition cycle to obtain the plurality of sub-problems.

Refer to FIG. 17, this application further provides an apparatus for generating a production plan, and the apparatus for generating a production plan includes:

a transceiver module 1701, configured to obtain service data used to define a service feature, where the service data includes constant data, the service data is used to solve an objective function, the objective function indicates a solve objective of a service problem, the solve objective indicates solving a production plan for producing a product, the constant data includes a production target of a to-be-produced product and a parameter for producing the product, the production target includes a quantity of the products produced, and the objective function includes a decision variable related to the service feature, where

the transceiver module 1701 is further configured to obtain at least one constraint item, where the constraint item includes a constraint relationship between the decision variable and the constant data;

a splitting module 1702, configured to split the constant data to obtain a plurality of data blocks, where each data block is corresponding to at least one sub-constraint item, the at least one sub-constraint item is obtained by splitting the at least one constraint item, and the at least one sub-constraint item includes a constraint relationship between split constant data and the decision variable;

an allocation module 1703, configured to allocate the plurality of data blocks to a plurality of compute nodes, so that the plurality of nodes generate a plurality of constraint blocks in parallel based on the plurality of data blocks and corresponding sub-constraint items, where the plurality of constraint blocks form a constraint matrix, and the plurality of constraint blocks form a constraint for solving the service problem; and

a solving module 1704, configured to determine a value of the decision variable based on the constraint matrix to achieve the solve objective of the service problem, where the solve objective represents the production plan for producing the product.

In a possible implementation, the allocation module 1703 is specifically configured to allocate a first data block to a first compute node, so that the first compute node performs the following steps: substituting the first data block into a target sub-constraint item to obtain a sub-constraint expression, where the first data block is any one of the plurality of data blocks, the target sub-constraint item is a sub-constraint item that is in the plurality of sub-constraint items and that is corresponding to the first data block; traversing the sub-constraint expression, to screen and obtain at least one variable, where the non-trivial item in the sub-constraint expression includes at least one variable in the decision variable, and the first compute node is one of the plurality of compute nodes; and parsing the at least one variable to obtain a constraint block.

In a possible implementation, the solving module 1704 is specifically configured to divide the constraint matrix in a time dimension to obtain a plurality of sub-problems, where the service problem indicates solving a production plan in a preset time period in the time dimension, and each sub-problem in the plurality of sub-problems indicates solving a production plan for producing the product in a corresponding time period; and separately solve the plurality of sub-problems to obtain a value of at least one variable of the decision variable included in the plurality of sub-problems, where the value of at least one variable of the decision variable included in the plurality of sub-problems forms the solve objective of the service problem.

In a possible implementation, the solving module 1704 is specifically configured to: aggregate the constraint matrix, and solve an aggregated matrix to obtain a guided solution; and solve the plurality of sub-problems by using the guided solution as a constraint condition, to obtain a value of at least one variable of the decision variable included in the plurality of sub-problems.

In a possible implementation, the solving module 1704 is specifically configured to solve the plurality of sub-problems in a preset order by using the guided solution as the constraint condition, to obtain a value of at least one variable of the decision variable included in the plurality of sub-problems, where at least one sub-problem arranged after a first sub-problem in the preset order is aggregated to obtain an additional sub-problem, the first sub-problem is any one of the plurality of sub-problems, the first sub-problem and the additional sub-problem are fused to obtain a fused sub-problem, and the fused sub-problem is solved to obtain a value of at least one variable of the decision variable included in one of the plurality of sub-problems.

In a possible implementation, the solving module 1704 is specifically configured to: obtain user constant data; determine a decomposition cycle based on the user constant data, where the decomposition cycle is shorter than a preset time period; and decompose the constraint matrix based on the decomposition cycle, to obtain the plurality of sub-problems.

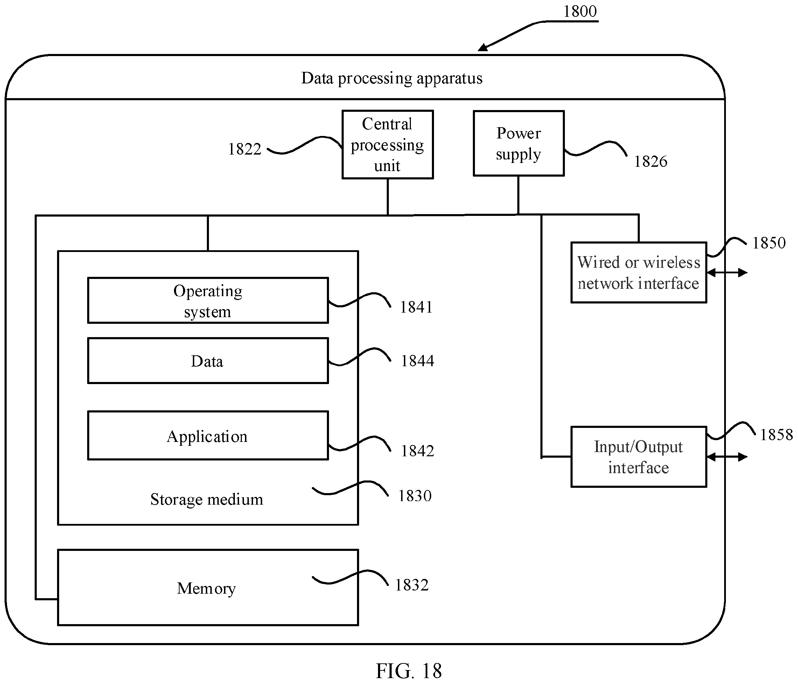

An embodiment of this application further provides a data processing apparatus. FIG. 18 is a schematic diagram of a structure of a data processing apparatus according to an embodiment of this application. The data processing apparatus described in the embodiment corresponding to FIG. 16 may be deployed on the data processing apparatus 1800, and is configured to implement functions of the data processing apparatus in the embodiments corresponding to FIG. 3 to FIG. 14. Specifically, the data processing apparatus 1800 may have a relatively large difference due to different configurations or performance, and may include one or more central processing units CPU 1822 (for example, one or more processors) and a memory 1832, and one or more storage media 1830 (for example, one or more mass storage devices) that stores an application 1842 or data 1844.

The memory 1832 and the storage medium 1830 may be temporary storage or persistent storage. In an embodiment, the memory 1832 is a random access memory (random access memory, RAM), and may directly exchange data with the central processing unit 1822, and is configured to load the data 1844 and the application 1842 and/or an operating system 1841 for the central processing unit 1822 to directly run and use, and is usually used as a temporary data storage medium of the operating system or other running programs. The program stored in the storage medium 1830 may include one or more modules (not shown in FIG. 18), and each module may include a series of instruction operations in the data processing apparatus.

Further, the central processing unit 1822 may be configured to communicate with the storage medium 1830, and perform, on the data processing apparatus 1800, the series of instruction operations in the storage medium 1830. In a possible implementation, the storage medium 1830 stores a program instruction and data that are corresponding to the method steps shown in any one of the foregoing embodiments in FIG. 3 to FIG. 13.

The data processing apparatus 1800 may further include one or more power supplies 1826, one or more wired or wireless network interfaces 1850, one or more input/output interfaces 1858, and/or one or more operating systems 1841, such as Windows ServerTM, Mac OS XTM, UnixTM, LinuxTM, and FreeBSDTM.

In a possible implementation, the central processing unit 1822 is configured to perform the method steps performed by the data processing apparatus shown in any one of the foregoing embodiments in FIG. 3 to FIG. 13. There may be one or more central processing units. When there are a plurality of central processing units, as shown in FIG. 5, after a plurality of data blocks are obtained through data splitting, the plurality of processors may perform parallel processing on the plurality of data blocks, thereby improving solving efficiency.

An embodiment of this application further provides a data processing apparatus. The data processing apparatus may also be referred to as a digital processing chip or a chip. The chip includes a processing unit and a communications interface. The processing unit may obtain a program instruction through the communications interface, and when the program instruction is executed by the processing unit, the processing unit is configured to perform the method steps performed by the data processing apparatus in any one of the foregoing embodiments in FIG. 3 to FIG. 12.

This embodiment of this application further provides a digital processing chip. A circuit and one or more interfaces that are configured to implement functions of the processor 1801 or the processor 1801 are integrated into the digital processing chip. When a memory is integrated into the digital processing chip, the digital processing chip may complete the method steps in any one or more of the foregoing embodiments. When a memory is not integrated into the digital processing chip, the digital processing chip may be connected to an external memory through a communications interface. The digital processing chip implements, based on program code stored in the external memory, actions performed by the data processing apparatus in the foregoing embodiments.

More specifically, when the data processing apparatus provided in this embodiment of this application is a chip, the chip specifically includes a processing unit and a communications unit. The processing unit may be, for example, a processor, and the communications unit may be, for example, an input/output interface, a pin, or a circuit. The processing unit may execute computer-executable instructions stored in a storage unit, so that the chip in a server performs the data processing method described in embodiments shown in FIG. 3 to FIG. 13.

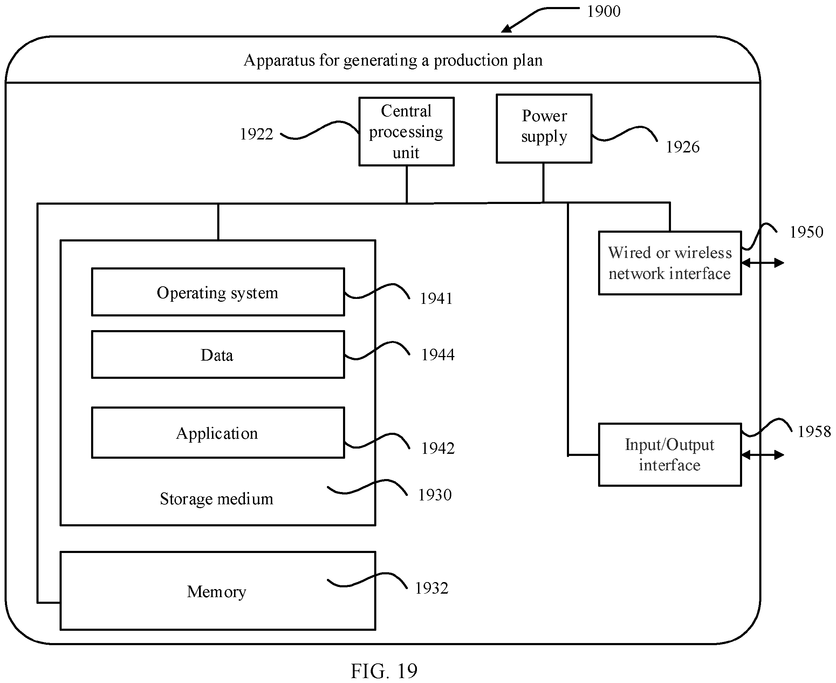

An embodiment of this application further provides an apparatus for generating a production plan. FIG. 19 is a schematic diagram of a structure of an apparatus for generating a production plan according to an embodiment of this application. The apparatus for generating a production plan described in the embodiment corresponding to FIG. 16 may be deployed on the apparatus 1900 for generating a production plan, and is configured to implement functions of the apparatus for generating a production plan in the embodiments corresponding to FIG. 13 to FIG. 14. Specifically, the apparatus 1900 for generating a production plan may have a relatively large difference due to different configurations or performance, and may include one or more central processing units CPU 1922 (for example, one or more processors) and a memory 1932, and one or more storage media 1930 (for example, one or more mass storage devices) that stores an application 1942 or data 1944.

The memory 1932 and the storage medium 1930 may be temporary storage or persistent storage. In an embodiment, the memory 1932 is a random access memory RAM, and may directly exchange data with the central processing unit 1922, and is configured to load the data 1944 and the application 1942 and/or an operating system 1941 for the central processing unit 1922 to directly run and use, and is usually used as a temporary data storage medium of the operating system or other running programs. The program stored in the storage medium 1930 may include one or more modules (not shown in FIG. 19), and each module may include a series of instruction operations in the apparatus for generating a production plan.

Further, the central processing unit 1922 may be set to communicate with the storage media 1930, and performs, on the apparatus 1900 for generating a production plan, the series of instruction operations in the storage medium 1930. In a possible implementation, the storage medium 1930 stores a program instruction and data that are corresponding to the method steps shown in any one of the foregoing embodiments in FIG. 13 to FIG. 14.

The apparatus 1900 for generating a production plan may further include one or more power supplies 1926, one or more wired or wireless network interfaces 1950, one or more input/output interfaces 1958, and/or one or more operating systems 1941, for example, Windows ServerTM, Mac OS XTM, UnixTM, LinuxTM, and FreeBSDTM.

In a possible implementation, the central processing unit 1922 is configured to perform the method steps performed by the apparatus for generating a production plan shown in any one of the foregoing embodiments in FIG. 3 to FIG. 13. There may be one or more central processing units. When there are a plurality of central processing units, as shown in FIG. 5, after a plurality of data blocks are obtained through data splitting, the plurality of processors may perform parallel processing on the plurality of data blocks, thereby improving solving efficiency.

An embodiment of this application further provides an apparatus for generating a production plan. The apparatus for generating a production plan may also be referred to as a digital processing chip or a chip. The chip includes a processing unit and a communications interface. The processing unit may obtain a program instruction by using the communications interface. The program instruction is executed by the processing unit. The processing unit is configured to perform the method steps performed by the apparatus for generating a production plan shown in any one of the embodiments in FIG. 13 to FIG. 14.

This embodiment of this application further provides a digital processing chip. A circuit and one or more interfaces that are configured to implement functions of the processor 1901 or the processor 1901 are integrated into the digital processing chip. When a memory is integrated into the digital processing chip, the digital processing chip may complete the method steps in any one or more of the foregoing embodiments. When a memory is not integrated into the digital processing chip, the digital processing chip may be connected to an external memory through a communications interface. The digital processing chip implements, based on program code stored in the external memory, actions performed by the apparatus for generating a production plan in the foregoing embodiments.

More specifically, when the apparatus for generating a production plan provided in this embodiment of this application is a chip, the chip specifically includes a processing unit and a communications unit. The processing unit may be, for example, a processor, and the communications unit may be, for example, an input/output interface, a pin, or a circuit. The processing unit may execute computer-executable instructions stored in the storage unit, so that the chip in the server performs the method for generating a production plan described in the embodiments shown in FIG. 13 to FIG. 14.

Optionally, the storage unit is a storage unit in the chip, for example, a register or a cache. The storage unit may alternatively be a storage unit that is in a wireless access device and that is outside the chip, for example, a read-only memory (read-only memory, ROM) or another type of static storage device that can store static information and instructions, or a random access memory RAM.

Specifically, the processing unit or the processor may be a central processing unit, a neural-network processing unit (neural-network processing unit, NPU), a graphics processing unit (graphics processing unit, GPU), a digital signal processor (digital signal processor, DSP), an application-specific integrated circuit (application-specific integrated circuit, ASIC), a field programmable gate array (field programmable gate array, FPGA), another programmable logic device, a discrete gate, a transistor logic device, a discrete hardware component, or the like. The general-purpose processor may be a microprocessor, any conventional processor, or the like.

The processor mentioned above may be a general-purpose central processing unit, a microprocessor, an ASIC, or one or more integrated circuits for controlling program execution of the methods in FIG. 3 to FIG. 14.

An embodiment of this application further provides a computer-readable storage medium. The computer-readable storage medium stores a program. When the program runs on a computer, the computer is enabled to perform steps in the methods described in the embodiments shown in FIG. 3 to FIG. 14.

An embodiment of this application further provides a computer program product. When the computer program product runs on a computer, the computer is enabled to perform steps performed by the data processing apparatus or the apparatus for generating a production plan in the methods described in the embodiments shown in FIG. 3 to FIG. 14.

In addition, it should be noted that the apparatus embodiments described above are merely an example. The units described as separate parts may or may not be physically separate, and parts displayed as units may or may not be physical units, may be located in one position, or may be distributed on a plurality of network units. Some or all of the modules may be selected based on actual requirements to achieve the objectives of the schemes of the embodiments. In addition, in the accompanying drawings of the apparatus embodiments provided by this application, connection relationships between modules indicate that the modules have communication connections with each other, which may be specifically implemented as one or more communications buses or signal cables.

Based on the descriptions in the foregoing implementations, a person skilled in the art can clearly understand that this application may be implemented by using software in addition to necessary general-purpose hardware, or by using special-purpose hardware, including an application-specific integrated circuit, a dedicated CPU, a dedicated memory, a dedicated element or component, and the like. Usually, any function implemented by a computer program may be easily implemented by using corresponding hardware. In addition, specific hardware structures used to implement a same function may be various, for example, an analog circuit, a digital circuit, or a dedicated circuit. However, in this application, a software program implementation is a better implementation in most cases. Based on such an understanding, the technical schemes of this application essentially or the part contributing to the prior art may be implemented in a form of a software product. The computer software product is stored in a readable storage medium, such as a floppy disk, a USB flash drive, a removable hard disk, a read-only memory ROM, a random access memory RAM, a magnetic disk, or an optical disc of a computer, and includes several instructions for instructing a computer device (which may be a personal computer, a server, a network device, or the like) to perform the methods described in the embodiments of this application.

All or some of the foregoing embodiments may be implemented by using software, hardware, firmware, or any combination thereof. When software is used to implement the embodiments, all or a part of the embodiments may be implemented in a form of a computer program product.

The computer program product includes one or more computer instructions. When the computer program instructions are loaded and executed on a computer, the procedure or functions according to the embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible to a computer, or a data storage device integrating one or more usable media, for example, a server or a data center. The usable medium may be a magnetic medium (for example, a floppy disk, a hard disk, or a magnetic tape), an optical medium (for example, a DVD), a semiconductor medium (for example, a solid-state disk (solid-state disk, SSD)), or the like.

In the specification, claims, and accompanying drawings of this application, the terms "first", "second", "third", "fourth", and the like (if available) are intended to distinguish between similar objects but do not necessarily indicate a specific order or sequence. It should be understood that the data termed in such a way is interchangeable in proper circumstances so that the embodiments described herein can be implemented in orders other than the order illustrated or described herein. Moreover, the terms "include", "contain" and any other variants mean to cover the non-exclusive inclusion, for example, a process, method, system, product, or device that includes a list of steps or units is not necessarily limited to those steps or units, but may include other steps or units not expressly listed or inherent to such a process, method, product, or device.

Finally, it should be noted that the foregoing descriptions are merely specific implementations of this application, but the protection scope of this application is not limited thereto. Any variation or replacement readily figured out by a person skilled in the art within the technical scope disclosed in this application shall fall within the protection scope of this application.

**Claims**

1. A data processing method, comprising:

   obtaining service data used to define a service feature, wherein the service data comprises constant data, the service data is used to solve an objective function, the objective function indicates a solve objective of a service problem, and the objective function comprises a decision variable related to the service feature;
   obtaining at least one constraint item, wherein the constraint item comprises a constraint relationship between the decision variable and the constant data;
   splitting the constant data to obtain a plurality of data blocks, wherein each data block is corresponding to at least one sub-constraint item, the at least one sub-constraint item is obtained by splitting the at least one constraint item, and the at least one sub-constraint item comprises a constraint relationship between split constant data and the decision variable;
   allocating the plurality of data blocks to a plurality of compute nodes, so that the plurality of compute nodes generate a plurality of constraint blocks in parallel based on the plurality of data blocks and a sub-constraint item corresponding to each data block, wherein the plurality of constraint blocks form a constraint matrix; and
   determining a value of the decision variable based on the constraint matrix to achieve the solve objective of the service problem.

2. The method according to claim 1, wherein that the plurality of compute nodes generate a plurality of constraint blocks in parallel based on the plurality of data blocks and a sub-constraint item corresponding to each data block comprises:
   allocating a first data block to a first compute node, so that the first compute node performs the following steps:

   fusing the first data block with the target sub-constraint item to obtain a sub-constraint expression, wherein the first data block is any one of the plurality of data blocks, the first compute node is one of the plurality of compute nodes, and the target sub-constraint item is a sub-constraint item that is in the plurality of sub-constraint items and that is corresponding to the first data block;
   screening and obtaining a non-trivial item from the sub-constraint expression, wherein the non-trivial item comprises at least one variable in the decision variable; and
parsing the non-trivial item to obtain a corresponding constraint block.

3. The method according to claim 1 or 2, wherein the determining a value of the decision variable based on the constraint matrix to achieve the solve objective of the service problem comprises:

dividing the constraint matrix in a time dimension to obtain a plurality of sub-problems; and
separately solving the plurality of sub-problems to obtain the value of the decision variable, wherein the value of the decision variable forms the solve objective of the service problem.

4. The method according to claim 3, wherein the separately solving the plurality of sub-problems comprises:

aggregating the constraint matrix, and solving an aggregated matrix to obtain a guided solution; and
solving the plurality of sub-problems by using the guided solution as a constraint condition, to obtain a value of at least one variable of the decision variable comprised in the plurality of sub-problems.

5. The method according to claim 4, wherein the solving the plurality of sub-problems by using the guided solution as a constraint condition comprises:
solving the plurality of sub-problems in a preset order by using the guided solution as the constraint condition, to obtain the value of the at least one variable of the decision variable comprised in the plurality of sub-problems, wherein at least one sub-problem arranged after a first sub-problem in the preset order is aggregated to obtain an additional sub-problem, the first sub-problem is any one of the plurality of sub-problems, the first sub-problem and the additional sub-problem are fused to obtain a fused sub-problem, and the fused sub-problem is solved to obtain a value of at least one variable of the decision variable comprised in one of the plurality of sub-problems.

6. The method according to any one of claims 3 to 5, wherein the dividing the constraint matrix in a time dimension to obtain a plurality of sub-problems comprises:

obtaining user input data;
determining a decomposition cycle based on the user input data; and
decomposing the constraint matrix based on the decomposition cycle to obtain the plurality of sub-problems.

7. A method for generating a production plan, comprising:

obtaining service data used to define a service feature, wherein the service data comprises constant data, the service data is used to solve an objective function, the objective function indicates a solve objective of a service problem, the solve objective indicates solving a production plan for producing a product, the constant data comprises a production target of a to-be-produced product and a parameter for producing the product, the production target comprises a quantity of the products produced, and the objective function comprises a decision variable related to the service feature;
obtaining at least one constraint item, wherein the constraint item comprises a constraint relationship between the decision variable and the constant data;
splitting the constant data to obtain a plurality of data blocks, wherein each data block is corresponding to at least one sub-constraint item, the at least one sub-constraint item is obtained by splitting the at least one constraint item, and the at least one sub-constraint item comprises a constraint relationship between split constant data and the decision variable;
allocating the plurality of data blocks to a plurality of compute nodes, so that the plurality of nodes generate a plurality of constraint blocks in parallel based on the plurality of data blocks and a sub-constraint item corresponding to each data block, wherein the plurality of constraint blocks form a constraint matrix; and
determining a value of the decision variable based on the constraint matrix to achieve the solve objective of the service problem, wherein the solve objective represents the production plan for producing the product.

8. The method according to claim 7, wherein that the plurality of compute nodes generate a plurality of constraint blocks in parallel based on the plurality of data blocks and a sub-constraint item corresponding to each data block comprises:

fusing, by a first compute node, the first data block with the target sub-constraint item to obtain a sub-constraint expression, wherein the first data block is any one of the plurality of data blocks, the first compute node is one of the plurality of compute nodes, and the target sub-constraint item is a sub-constraint item that is in the plurality of sub-constraint items and that is corresponding to the first data block;
screening and obtaining a non-trivial item from the sub-constraint expression, wherein the non-trivial item comprises at least one variable in the decision variable; and
parsing the non-trivial item to obtain a corresponding constraint block.

**9.** The method according to claim 7 or 8, wherein the determining a value of the decision variable based on the constraint matrix to achieve the solve objective service problem of the service problem comprises:

dividing the constraint matrix in a time dimension to obtain a plurality of sub-problems, wherein the service problem indicates solving a production plan in a preset time period in the time dimension, and each sub-problem in the plurality of sub-problems indicates solving a production plan for producing the product in a corresponding time period; and
separately solving the plurality of sub-problems to obtain the value of the decision variable, wherein the value of the decision variable forms the solve objective of the service problem.

**10.** The method according to claim 9, wherein the separately solving the plurality of sub-problems comprises:

aggregating the constraint matrix, and solving an aggregated matrix to obtain a guided solution; and
solving the plurality of sub-problems by using the guided solution as a constraint condition, to obtain the value of the decision variable in the plurality of sub-problems.

**11.** The method according to claim 10, wherein the solving the plurality of sub-problems by using the guided solution as a constraint condition comprises:
solving the plurality of sub-problems in a preset order by using the guided solution as the constraint condition, to obtain a value of at least one variable of the decision variable comprised in the plurality of sub-problems, wherein at least one sub-problem arranged after a first sub-problem in the preset order is aggregated to obtain an additional sub-problem, the first sub-problem is any one of the plurality of sub-problems, the first sub-problem and the additional sub-problem are fused to obtain a fused sub-problem, and the fused sub-problem is solved to obtain a value of at least one variable of the decision variable comprised in one of the plurality of sub-problems.

**12.** The method according to any one of claims 9 to 11, wherein the dividing the constraint matrix in a time dimension to obtain a plurality of sub-problems comprises:

obtaining user input data;
determining a decomposition cycle based on the user input data; and
decomposing the constraint matrix based on the decomposition cycle to obtain the plurality of sub-problems.

**13.** A data processing apparatus, comprising:

a transceiver module, configured to: obtain service data used to define a service feature, wherein the service data comprises constant data, the service data is used to solve an objective function, the objective function indicates a solve objective of a service problem, and the objective function comprises a decision variable related to the service feature; and
obtain at least one constraint item, wherein the at least one constraint item comprises a constraint relationship service problem between the decision variable and the constant data;
a splitting module, configured to split the constant data to obtain a plurality of data blocks, wherein each data block is corresponding to at least one sub-constraint item, the at least one sub-constraint item is obtained by splitting the at least one constraint item, and the at least one sub-constraint item comprises a constraint relationship between split constant data and the decision variable;
an allocation module, configured to allocate the plurality of data blocks to a plurality of compute nodes, so that the plurality of compute nodes generate a plurality of constraint blocks in parallel based on the plurality of data blocks and a sub-constraint item corresponding to each data block, wherein the plurality of constraint blocks form a constraint matrix; and
a solving module, configured to determine a value of the decision variable based on the constraint matrix to achieve the solve objective of the service problem.

**14.** The apparatus according to claim 13, wherein

the allocation module is specifically configured to allocate a first data block to a first compute node, so that the first compute node performs the following steps:

fusing the first data block with the target sub-constraint item to obtain a sub-constraint expression, wherein the first data block is any one of the plurality of data blocks, and the target sub-constraint item is a sub-constraint item that is in the plurality of sub-constraint items and that is corresponding to the first data block;
screening and obtaining a non-trivial item from the sub-constraint expression, wherein the non-trivial item comprises at least one variable in the decision variable; and
parsing the non-trivial item to obtain a corresponding constraint block.

15. The apparatus according to claim 13 or 14, wherein the solving module is specifically configured to:

divide the constraint matrix in a time dimension to obtain a plurality of sub-problems; and
separately solve the plurality of sub-problems to obtain the value of the decision variable, wherein the value of the decision variable forms the solve objective of the service problem.

16. The apparatus according to claim 15, wherein the solving module is specifically configured to:

aggregate the constraint matrix, and solve an aggregated matrix to obtain a guided solution; and
solve the plurality of sub-problems by using the guided solution as a constraint condition, to obtain a value of at least one variable of the decision variable comprised in the plurality of sub-problems.

17. The apparatus according to claim 16, wherein
the solving module is specifically configured to solve the plurality of sub-problems in a preset order by using the guided solution as the constraint condition, to obtain a value of at least one variable of the decision variable comprised in the plurality of sub-problems, wherein at least one sub-problem arranged after a first sub-problem in the preset order is aggregated to obtain an additional sub-problem, the first sub-problem is any one of the plurality of sub-problems, the first sub-problem and the additional sub-problem are fused to obtain a fused sub-problem, and the fused sub-problem is solved to obtain a value of at least one variable of the decision variable comprised in one of the plurality of sub-problems.

18. The apparatus according to any one of claims 15 to 17, wherein the solving module is specifically configured to:

obtain user input data;
determine a decomposition cycle based on the user input data; and
decompose the constraint matrix based on the decomposition cycle to obtain the plurality of sub-problems.

19. An apparatus for generating a production plan, comprising:

a transceiver module, configured to obtain service data used to define a service feature, wherein the service data comprises constant data, the service data is used to solve an objective function, the objective function indicates a solve objective of a service problem, the solve objective indicates solving a production plan for producing a product, the constant data comprises a production target of a to-be-produced product and a parameter for producing the product, the production target comprises a quantity of the products produced, and the objective function comprises a decision variable service problem related to the service feature, wherein the transceiver module is further configured to obtain at least one constraint item, wherein the constraint item comprises a constraint relationship between the decision variable and the constant data;
a splitting module, configured to split the constant data to obtain a plurality of data blocks, wherein each data block is corresponding to at least one sub-constraint item, the at least one sub-constraint item is obtained by splitting the at least one constraint item, and the at least one sub-constraint item comprises a constraint relationship between split constant data and the decision variable;
an allocation module, configured to allocate the plurality of data blocks to a plurality of compute nodes, so that the plurality of nodes generate a plurality of constraint blocks in parallel based on the plurality of data blocks and corresponding sub-constraint items, wherein the plurality of constraint blocks form a constraint matrix; and
a solving module, configured to determine a value of the decision variable based on the constraint matrix to achieve the solve objective of the service problem, wherein the solve objective represents the production plan for producing the product.

**20.** The apparatus according to claim 19, wherein

the allocation module is specifically configured to allocate a first data block to a first compute node, so that the first compute node performs the following steps: fusing the first data block with the target sub-constraint item to obtain a sub-constraint expression, wherein the first data block is any one of the plurality of data blocks, the target sub-constraint item is a sub-constraint item that is in the plurality of sub-constraint items and that is corresponding to the first data block, and the first compute node is one of the plurality of compute nodes; screening and obtaining a non-trivial item from the sub-constraint expression, wherein the non-trivial item comprises at least one variable in the decision variable; and parsing the non-trivial item to obtain a corresponding constraint block.

**21.** The apparatus according to claim 19 or 20, wherein the solving module is specifically configured to:

divide the constraint matrix in a time dimension to obtain a plurality of sub-problems, wherein the service problem indicates solving a production plan in a preset time period in the time dimension, and each sub-problem in the plurality of sub-problems indicates solving a production plan for producing the product in a corresponding time period; and separately solve the plurality of sub-problems to obtain the value of the decision variable, wherein the value of the decision variable forms the solve objective of the service problem.

**22.** The apparatus according to claim 21, wherein the solving module is specifically configured to:

obtain user input data; determine a decomposition cycle based on the user input data; and decompose the constraint matrix based on the decomposition cycle to obtain the plurality of sub-problems.

**23.** A data processing apparatus, comprising one or more processors, wherein the one or more processors are coupled to a memory, the memory stores a program, and when a program instruction stored in the memory is executed by the one or more processors, the method according to any one of claims 1 to 6 is implemented.

**24.** An apparatus for generating a production plan, comprising one or more processors, wherein the one or more processors are coupled to a memory, the memory stores a program, and when a program instruction stored in the memory is executed by the one or more processors, the method according to any one of claims 7 to 12 is implemented.

**25.** A computer-readable storage medium, comprising a program, wherein when the program is executed by a processing unit, the method according to any one of claims 1 to 12 is performed.

**26.** A computer program product, comprising a computer program/instruction, wherein when the computer program/instruction is executed by a processor, steps of the method according to any one of claims 1 to 12 are implemented.

FIG. 1

FIG. 2

Obtain input data, where the input data includes service data and at least one constraint item                                301

Split constant data in the service data to obtain a plurality of data blocks, where each data block is corresponding to at least one sub-constraint item                                302

Allocate the plurality of data blocks to a plurality of compute nodes, so that the plurality of compute nodes generate a plurality of constraint blocks in parallel respectively based on each of the plurality of data blocks and a corresponding sub-constraint item, where the plurality of constraint blocks form a constraint matrix                                303

Determine, based on the constraint matrix, a value of a decision variable, to achieve a solve objective of a service problem                                304

FIG. 3

FIG. 4

FIG. 5

FIG. 6

$$inv_{t,p,i} \quad \rightarrow \quad inv_{t_1 \sim t_2,p,i} \qquad inv_{t_2 \sim t_3,p,i} \qquad inv_{t_3 \sim t_4,p,i} \qquad \cdots$$

$$\downarrow \qquad\qquad\qquad \downarrow \qquad\qquad\qquad \downarrow$$

| CPU1 | CPU2 | CPU3 |

**FIG. 7**

Data block

Sub-constraint item

Outer iterator

Inner iterator

Allocator

Constraint block

**FIG. 8**

period

Sub-problem 0

Sub-problem 1

Sub-problem 2

Sub-problem 3

**FIG. 9**

FIG. 10

FIG. 11

FIG. 12

Obtain input data, where the input data indicates solving a production plan —— 1301

Split constant data in the service data to obtain a plurality of data blocks —— 1302

Process each data block in a plurality of data blocks and a corresponding sub-constraint item in parallel to obtain a plurality of constraint blocks —— 1303

Obtain the production plan based on a constraint matrix —— 1304

FIG. 13

FIG. 14

FIG. 15

Data processing apparatus

Transceiver module ⌐ 1601

Splitting module ⌐ 1602

Solving module ⌐ 1604

Allocation module ⌐ 1603

FIG. 16

Apparatus for generating a production plan

Transceiver module ⌐ 1701

Splitting module ⌐ 1702

Solving module ⌐ 1704

Allocation module ⌐ 1703

FIG. 17

FIG. 18

FIG. 19

## INTERNATIONAL SEARCH REPORT

| | International application No. |
|---|---|
| | **PCT/CN2022/086747** |

| A. | CLASSIFICATION OF SUBJECT MATTER |
|---|---|

G06F 9/48(2006.01)i

According to International Patent Classification (IPC) or to both national classification and IPC

| B. | FIELDS SEARCHED |
|---|---|

Minimum documentation searched (classification system followed by classification symbols)

G06F

Documentation searched other than minimum documentation to the extent that such documents are included in the fields searched

Electronic data base consulted during the international search (name of data base and, where practicable, search terms used)

USTXT; VEN; CNABS; WPABS; CNTXT; EPTXT; WOTXT; CNKI; IEEE: 目标函数, 约束条件, 决策变量, 常量, 不变量, 切分, 并行, 约束矩阵, 优化, 求解, 融合, 聚合, 时间维度, 引导, 周期, object function, constraint condition, decision variable, constant, split, parallel, constraint matrix, optimization, solve, fuse, time dimension, guide, period

| C. | DOCUMENTS CONSIDERED TO BE RELEVANT |
|---|---|

| Category* | Citation of document, with indication, where appropriate, of the relevant passages | Relevant to claim No. |
|---|---|---|
| X | 周兴建 等 (ZHOU, Xingjian et al.). "基于Lagrange算法的集群式供应链跨链订单并行配置优化 (Optimization and Parallel Allocation of Cross-Chain Orders in Cluster Supply Chain with Lagrange Algorithm)" 计算机集成制造系统 (Computer Integrated Manufacturing Systems), Vol. 21, No. 8, 31 August 2015 (2015-08-31), ISSN: 1006-5911, text, pp. 2180-2189 | 1, 7, 13, 19, 23-26 |
| X | 王万良 等 (WANG, Wanliang et al.). "基于混合差分进化算法的并行机批处理调度问题研究 (New Hybrid Differential Evolution for Parallel Machines Batch Scheduling)" 机电工程 (Journal of Mechanical & Electrical Engineering), Vol. 29, No. 2, 28 February 2012 (2012-02-28), ISSN: 1001-4551, pp. 125-130 | 1, 7, 13, 19, 23-26 |

☑ Further documents are listed in the continuation of Box C.    ☑ See patent family annex.

| | |
|---|---|
| *   Special categories of cited documents: | "T"   later document published after the international filing date or priority date and not in conflict with the application but cited to understand the principle or theory underlying the invention |
| "A"   document defining the general state of the art which is not considered to be of particular relevance | |
| "E"   earlier application or patent but published on or after the international filing date | "X"   document of particular relevance; the claimed invention cannot be considered novel or cannot be considered to involve an inventive step when the document is taken alone |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| Date of the actual completion of the international search | Date of mailing of the international search report |
|---|---|
| **06 June 2022** | **27 June 2022** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

| International application No. |
| --- |
| **PCT/CN2022/086747** |

**C.    DOCUMENTS CONSIDERED TO BE RELEVANT**

| Category* | Citation of document, with indication, where appropriate, of the relevant passages | Relevant to claim No. |
| --- | --- | --- |
| Y | 周兴建 等 (ZHOU, Xingjian et al.). "基于Lagrange算法的集群式供应链跨链订单并行配置优化 (Optimization and Parallel Allocation of Cross-Chain Orders in Cluster Supply Chain with Lagrange Algorithm)" 计算机集成制造系统 (Computer Integrated Manufacturing Systems), Vol. 21, No. 8, 31 August 2015 (2015-08-31), ISSN: 1006-5911,  text, pp. 2180-2189 | 3, 6, 9, 12, 15, 18, 21-26 |
| Y | 韩雄威 (HAN, Xiongwei). "华为供应链生产计划优化问题研究 (Optimization for the Production Planning Problem in Huawei's Supply Chain)" 中国优秀博硕士学位论文全文数据库(硕士)信息科技辑 (月刊) ( China Doctoral Dissertations/Master's Theses full-text database (Monthly)), No. 3, 15 March 2020 (2020-03-15), ISSN: 1674-0246,  text, pp. 15-43 | 3, 6, 9, 12, 15, 18, 21-26 |
| Y | 王万良 等 (WANG, Wanliang et al.). "基于混合差分进化算法的并行机批处理调度问题研究 (New Hybrid Differential Evolution for Parallel Machines Batch Scheduling)" 机电工程 (Journal of Mechanical & Electrical Engineering), Vol. 29, No. 2, 28 February 2012 (2012-02-28), ISSN: 1001-4551,  pp. 125-130 | 3, 6, 9, 12, 15, 18, 21-26 |
| A | US 2003065689 A1 (ASAI, A. et al.) 03 April 2003 (2003-04-03)  entire document | 1-26 |
| A | CN 105303253 A (BEIHANG UNIVERSITY) 03 February 2016 (2016-02-03)  entire document | 1-26 |

Form PCT/ISA/210 (second sheet) (January 2015)

**INTERNATIONAL SEARCH REPORT**
**Information on patent family members**

| International application No. |
| --- |
| **PCT/CN2022/086747** |

| Patent document cited in search report | | | Publication date (day/month/year) | Patent family member(s) | | | Publication date (day/month/year) |
| --- | --- | --- | --- | --- | --- | --- | --- |
| US | 2003065689 | A1 | 03 April 2003 | JP | 2003030172 | A | 31 January 2003 |
| | | | | US | 7197486 | B2 | 27 March 2007 |
| CN | 105303253 | A | 03 February 2016 | CN | 105303253 | B | 31 May 2019 |

Form PCT/ISA/210 (patent family annex) (January 2015)

**REFERENCES CITED IN THE DESCRIPTION**

**Patent documents cited in the description**

- CN 202110420723